# FASCICULE DE BREVET EUROPEEN

(11) **EP 2 900 357 B1**
(45) Date de publication et mention de la délivrance du brevet: **23.11.2016**
(21) Numéro de dépôt: 13771439.0
(22) Date de dépôt: 26.09.2013
(51) Int. Cl.: B01D 67/00, B01D 69/10, B01D 69/14, B01D 71/02, G21F 9/12, G21F 9/30

(54) **MEMBRANE SUPPORTEE FONCTIONNALISEE PAR DES HEXA- ET OCTACYANOMETALLATES, SON PROCEDE DE PREPARATION ET PROCEDE DE SEPARATION LA METTANT EN OEUVRE**
MIT HEXA- UND OCTACYANOMETALLATEN FUNKTIONALISIERTE GESTÜTZTE MEMBRAN, VERFAHREN ZUR HERSTELLUNG DAVON UND TRENNVERFAHREN DAMIT
SUPPORTED MEMBRANE FUNCTIONALIZED WITH HEXA- AND OCTACYANOMETALLATES, PROCESS FOR THE PREPARATION THEREOF AND SEPARATION PROCESS USING SAME

(30) Priorité: 28.09.2012 FR 1259228
(43) Date de publication de la demande: 05.08.2015
(73) Titulaire: Commissariat à l'Énergie Atomique et aux Énergies Alternatives, 75015 Paris (FR); Ceramiques Techniques Industrielles CTI, 30340 Salindres (FR); Centre National de la Recherche Scientifique, 75016 Paris (FR); Université de Montpellier 2, 34000 Montpellier (FR)
(72) Inventeur: GRANDJEAN, Agnès, F-30330 Saint-Marcel-de-Careiret (FR); BARRE, Yves, F-84100 Uchaux (FR); LOURADOUR, Eric, F-30500 Saint-Ambroix (FR); DHALER, Didier, F-69160 Tassin La Demi-Lune (FR); GUARI, Yannick, F-34730 Prades-le-Lez (FR); LARIONOVA, Joulia, F-34730 Prades-le-Lez (FR)
(74) Mandataire: Brevalex
(86) Numéro de dépôt international: PCT/EP2013/070056
(87) Numéro de publication internationale: WO 2014/049048

(56) Documents cités:
- WO-A1-03/018194
- WO-A1-2005/040404
- WO-A2-2010/133689
- FR-A1- 2 859 924

## Description

### DOMAINE TECHNIQUE

L'invention concerne une membrane supportée fonctionnalisée par des hexa- et octacyanometallates.

Plus précisément, l'invention a trait à une membrane supportée comprenant une membrane de filtration poreuse solide inorganique supportée par un support poreux solide inorganique, ladite membrane de filtration et éventuellement ledit support comprenant des nanoparticules d'un polymère de coordination métallique à ligands CN comprenant des cations métalliques et des anions hexa- et octacyanométallates, notamment des anions hexacyanoferrates, lesdites nanoparticules étant liées par une liaison organométallique ou de coordination à un greffon organique fixé chimiquement à l'intérieur des pores de la membrane de filtration poreuse solide inorganique et éventuellement à l'intérieur des pores du support poreux solide inorganique.

La présente invention a également trait au procédé de préparation de ladite membrane.

La présente invention concerne également un procédé de séparation des particules solides et des cations métalliques, plus précisément un procédé de filtration des particules solides et d'extraction des cations métalliques, notamment radioactifs, contenus dans un liquide mettant en oeuvre ladite membrane.

### ÉTAT DE LA TECHNIQUE ANTÉRIEURE

Les installations nucléaires telles que les réacteurs de puissance, les usines de retraitement du combustible nucléaire usé, les laboratoires, les centres de recherche, et les stations de traitement des effluents liquides, génèrent des effluents radioactifs.

Ces effluents, dont les volumes sont considérables, doivent être traités et décontaminés avant leur rejet dans l'environnement.

Les polluants que contiennent ces effluents et qui doivent donc être éliminés sont principalement des particules solides et des radioéléments essentiellement présents sous la forme de cations métalliques en solution.

D'une manière générale pour traiter ces effluents, il sera nécessaire d'une part de séparer par filtration les particules solides et d'autre part de procéder à l'extraction sélective des radioéléments présents dans ces effluents tels que des solutions.

Ce sont donc deux opérations distinctes qui doivent être effectuées pour éliminer l'ensemble des polluants, à savoir des particules et des radioéléments contenus dans ces effluents.

Les procédés utilisés actuellement pour le traitement de ces effluents mettent donc tout d'abord en oeuvre une étape de coprécipitation afin d'éliminer les particules solides, et également dans certains cas, afin d'entraîner par coprécipitation sélective les cations des radioéléments à décontaminer, cette étape étant éventuellement complétée par une étape utilisant des résines échangeuses d'ions pour fixer les radioéléments.

Chacune de ces étapes présente des inconvénients.

Dans le cas de l'étape de coprécipitation, la quantité d'effluents générée est élevée et la récupération des particules après précipitation est une opération difficile.

Dans le cas de l'étape de fixation des radioéléments, cette étape est actuellement généralement réalisée avec des résines échangeuses d'ions organiques.

De telles résines présentent au moins deux inconvénients. D'une part leur capacité est limitée, et d'autre part à cause du caractère irradiant des radioéléments extraits, ces derniers peuvent dans certains cas entraîner une détérioration des résines en conditions de stockage.

C'est notamment pour remédier aux défauts des résines échangeuses d'ions organiques qu'ont été développés les fixateurs minéraux puis les fixateurs composites. On pourra à cet égard se reporter à l'état de la technique antérieure exposée dans le document WO-A2-2010/133689.

Le document WO-A2-2010/133689 décrit un matériau solide nanocomposite à base d'hexa- et octacyanométallates. Plus précisément, ce document a trait à un matériau solide nanocomposite comprenant des nanoparticules d'un polymère de coordination métallique à ligands CN comprenant des cations métalliques et des anions hexa- et octacyanométallates, notamment des anions hexacyanoferrates, lesdites nanoparticules étant liées par une liaison organométallique ou de coordination à un greffon organique fixé chimiquement à l'intérieur des pores d'un support en verre poreux par exemple sous la forme de billes.

Ce document décrit également un procédé de fixation de polluants minéraux, tels que des cations inorganiques, comme les cations de césium radioactifs, contenus dans une solution, mettant en oeuvre ledit matériau.

Les exemples de ce document décrivent la fixation du césium par des poudres de verre poreux greffées.

A l'issue du procédé de fixation, les polluants se trouvant dans la solution sont immobilisés dans le matériau solide et la porosité du matériau essentiellement constitué par du verre peut être fermée par un traitement réalisé dans des conditions douces.

Le matériau solide dont la porosité a été fermée peut être directement stocké car ses stabilités mécaniques et chimiques autorisent un tel stockage sans qu'une dégradation se produise.

Le matériau de ce document permet donc d'apporter une solution au problème de capacité insuffisante des résines, mais surtout au problème du devenir des matériaux après l'extraction notamment du césium radioactif, puisque le support de verre poreux contenant le Cs radioactif dont la porosité a été fermée peut être considéré comme un simple déchet solide.

Toutefois, le matériau et le procédé de ce document permettent essentiellement la fixation des cations métalliques, et en aucune manière la séparation par filtration des particules solides contenues dans un effluent, de plus ces matériaux sont utilisés dans un procédé de type colonne, limitant ainsi les débits de traitement à cause des pertes de charges liées à ce procédé.

Il est donc nécessaire, comme de coutume, d'avoir recours à une étape préalable de séparation des particules solides.

Le document Abdel-Fattah, T.M., S.M.S. Haggag, et al. (2001), "Heavy metal ions extraction from aqueous media using nanoporous silica", Chemical Engineering Journal 175; 117-123, décrit l'extraction d'ions de métaux lourds, et notamment l'extraction sélective d'ions Hg(II), à partir de milieux aqueux à l'aide de microcolonnes garnies de la silice nanoporeuse (NPSi) modifiée par des fonctions thiol (NPSi-SH) plus précisément de silice nanoporeuse modifiée en surface par immobilisation chimique et liaison de 3-mercaptopropyl-triméthoxysilane.

Toutefois, le matériau de ce document permet seulement la fixation des cations métalliques et non la séparation des particules solides contenues dans un effluent.

Il est donc nécessaire, comme de coutume, d'avoir recours à une étape préalable de séparation des particules solides.

Le document Oji, L.N., K.B. Martin, et al. (2009), "Development of prototype titanate ion-exchange loaded-membranes for strontium, cesium and actinide decontamination from aqueous media", Journal of Radioanalytical and Nuclear Chemistry 279(3): 847-854, concerne l'incorporation de particules de titanates échangeurs d'ions tels que du titanate monosodique et du silicotitanate cristallin dans des membranes organiques inertes et poreuses.

Il est indiqué que ces membranes permettent l'élimination du césium-133 et du strontium-88 en solution dans des effluents aqueux nucléaires caustiques.

Les membranes organiques mises en oeuvre dans ce document peuvent poser des problèmes en termes de tenue sous radiolyse.

D'autre part, les titanates sont peu sélectifs vis-à-vis du Cs, et même du Sr, ce qui induit une baisse de la capacité de décontamination lors du traitement de solutions complexes.

Là-encore, le matériau de ce document permet seulement la fixation des cations métalliques et non la séparation des particules solides contenues dans un effluent.

Il est donc nécessaire, comme de coutume, d'avoir recours à une étape préalable de séparation des particules solides.

Le document Rao, S., B. Paul, et al. (2000), "Effective Removal of Cesium and Strontium from Radioactive Wastes Using Chemical Treatment Followed by Ultra Filtration", Journal of radioanalytical and Nuclear Chemistry 246(2): 413-418 concerne un procédé d'élimination du césium et du strontium d'effluents radioactifs qui utilise un traitement chimique de précipitation au phosphate de calcium ou au ferrocyanure de cuivre suivi par une ultrafiltration.

Le document Zhang, C.P., P. Gu, et al. (2009) "Research on the treatment of liquid waste containing cesium by an adsorption-microfiltration process with potassium zinc hexacyanoferrate", Journal of Hazardous Materials 167(1-3): 1057-1062, a trait à un procédé d'élimination du césium d'une solution aqueuse par adsorption sur des particules de l'adsorbant K₂Zn₃[Fe(CN)₆] puis microfiltration. Plus exactement, l'adsorbant est ajouté à une solution de nitrate de sodium agitée pendant une heure puis filtrée à travers une membrane de microfiltration.

Dans les documents Rao et al et Zhang et al, on réalise donc une première étape de décontamination par un traitement chimique de coprécipitation ou d'adsorption puis une seconde étape distincte, séparée, de filtration membranaire.

La seconde étape sert à séparer les particules ayant sorbé les radioéléments lors de la première étape de traitement chimique.

Les procédés des documents Rao et al et Zhang et al utilisent deux technologies différentes, distinctes, en série.

Le couplage de ces technologies rend notamment les procédés complexes, nécessite la mise en oeuvre de plusieurs appareils, accroît la taille des installations, multiplie les transferts de matière et les circuits de circulation de fluides, est difficile à mettre en oeuvre en pratique.

En outre, ce couplage n'augmente pas nécessairement l'efficacité de la décontamination.

Le document FR2859924 décrit une membrane comprenant une membrane de filtration poreuse solide inorganique, revêtu d'une pellicule d'un polymère échangeur d'anions auquel est fixé un hexacyanoferrate de métal insoluble formant une couche mince.

Il existe donc, au regard de ce qui précède, un besoin pour un matériau et un procédé qui permettent avec une grande efficacité, en un nombre limité d'étapes simples, la séparation simultanée des particules solides et des cations métalliques, notamment radioactifs, contenus dans un liquide.

Le but de l'invention est entre autres de répondre à ce besoin.

Le but de la présente invention est encore de fournir un tel matériau et un tel procédé qui ne présentent pas les inconvénients, défauts, limitations et désavantages des matériaux et procédés de l'art antérieur tel qu'exposé plus haut et qui apporte une solution aux problèmes posés par les matériaux et procédés de l'art antérieur.

### EXPOSÉ DE L'INVENTION

Ce but, et d'autres encore, sont atteints, conformément à l'invention, par une membrane supportée comprenant une membrane de filtration poreuse solide inorganique supportée par un support poreux solide inorganique, ladite membrane supportée comprenant des nanoparticules d'un polymère de coordination métallique à ligands CN comprenant des cations Mⁿ⁺, où M est un métal de transition, et n est 2 ou 3 ; et des anions Alk⁺_{y}[M'(CN)ₘ]^{x-}, où Alk est un métal alcalin, y est 0, 1, ou 2, M' est un métal de transition, x est 3 ou 4, et m est 6 ou 8 ; lesdits cations Mⁿ⁺ du polymère de coordination étant liés par une liaison organométallique ou de coordination à un groupe organique d'un greffon organique fixé chimiquement à la surface de la membrane de filtration, à l'intérieur des pores de la membrane de filtration, et éventuellement à l'intérieur des pores du support..

Lesdites nanoparticules peuvent aussi être appelées éventuellement « nanocristaux ».

Par fixé « à l'intérieur des pores », on entend généralement « fixé à la surface interne des parois des canaux définissant lesdits pores ».

Avantageusement, Alk peut être K.

Avantageusement, Mⁿ⁺ peut être Fe²⁺, Ni²⁺, Fe³⁺, Co²⁺, Cu²⁺, ou Zn²⁺.

Avantageusement, M' est Fe²⁺ ou Fe³⁺ ou Co³⁺ et m est 6 ; ou bien M' est Mo⁵⁺ et m est 8.

Avantageusement, les anions [M'(CN)ₘ]^{x-} peuvent être des anions [Fe(CN)₆]³⁻, [Fe(CN)₆]⁴⁻, [Co(CN)₆]³⁻ ou [Mo(CN)₈]³.

Avantageusement, les cations Mⁿ⁺ peuvent être des cations Ni²⁺, Cu²⁺, Fe²⁺ ou Fe³⁺ et les anions peuvent être des anions [Fe(CN)₆]³⁻ ou [Fe(CN)₆]⁴⁻.

Avantageusement, les cations Mⁿ⁺ peuvent être des cations Fe³⁺ et les anions peuvent être des anions [Mo(CN)₈]³⁻.

Avantageusement, les cations peuvent être des cations Co²⁺ ou Ni²⁺ et les anions peuvent être des anions [Co(CN)₆]³⁻.

Avantageusement, les nanoparticules ont une forme de sphère ou de sphéroïde.

Les nanoparticules ont généralement une taille, telle qu'un diamètre, de 3 nm à 30 nm.

Il est à noter que les nanoparticules du polymère de coordination ont généralement une taille et une forme uniformes dans toute la membrane et éventuellement le support.

Avantageusement, le groupe organique peut être choisi parmi les groupes azotés, tels que la pyridine et les amines ; les groupes oxygénés tels que les acétylacétonates, et les carboxylates ; et les groupes phosphorés tels que les phosphonates.

Avantageusement, la membrane peut être constituée par au moins un oxyde de métal ou de métalloïde.

De préférence, ledit oxyde est choisi parmi Al₂O₃, SiO₂, ZrO₂, TiO₂, et leurs mélanges.

Avantageusement, le support peut être constitué par un matériau choisi parmi les oxydes de métaux, les oxydes de métalloïdes, et leurs mélanges, tels que TiO₂, ZrO₂, Al₂O₃, SiO₂, Y₂O₃, CaO, MgO, et leurs mélanges; les carbures de métaux, les carbures de métalloïdes tels que SiC, et leurs mélanges ; les silicates tels que les composés de type mullite (silicate d'aluminium) et cordiérite (silicate alumineux ferromagnésien), et leurs mélanges ; les titanates de métaux tels que la tialite (titanate d'aluminium), les titanates de métalloïdes, et leurs mélanges ; et leurs mélanges.

Avantageusement, la membrane de filtration a une épaisseur de 0,1 à 100 µm, de préférence de 2 µm à 50 µm.

Avantageusement, la membrane de filtration est un système multicouche, en d'autres termes la membrane comprend plusieurs couches, par exemple de 2 à 10 couches.

La membrane de filtration peut être une membrane de microfiltration avec une taille moyenne des pores de 2 à 0,1 µm, une membrane d'ultrafiltration avec une taille moyenne des pores de 1 nm à 100 nm, par exemple de 10 nm à 100 nm, ou une membrane de nanofiltration avec une taille moyenne des pores inférieure à 1 nm .

Avantageusement, la membrane de filtration peut présenter une surface spécifique de 0,1 m²/g à 300 m²/g.

Avantageusement, la porosité de la membrane de filtration poreuse est de 10% à 80% en volume. Cette porosité est généralement mesurée par adsorption d'azote, ou par porosimètrie mercure dans le cas des membranes de microfiltration.

La membrane de filtration peut être une membrane plane et le support un support plan, ou bien la membrane peut être une membrane tubulaire, de préférence à section circulaire ou polygonale, et le support peut de même être un support tubulaire, de préférence à section circulaire ou polygonale, par exemple carrée ou hexagonale, entourant ladite membrane.

Avantageusement, le support peut être un bloc ou monolithe dont la forme est celle d'un cylindre de révolution dans lequel sont définis un ou plusieurs canaux à section droite généralement circulaire ou polygonale, parallèles à l'axe dudit cylindre, la paroi interne de ce canal ou de ces canaux étant revêtue d'une couche inorganique formant une ou des membranes de filtration tubulaires.

La membrane selon l'invention présente une structure et une composition spécifiques, et peut être définie comme une membrane de filtration poreuse solide inorganique supportée nanocomposite comprenant des nanoparticules d'un polymère de coordination métallique à ligands CN, lesdites nanoparticules étant liées par une liaison organométallique ou de coordination à un groupe organique d'un greffon organique fixé chimiquement à la surface de la membrane de filtration, à l'intérieur des pores de la membrane de filtration, et éventuellement à l'intérieur des pores du support.

En d'autres termes, la membrane supportée selon l'invention comprend des nanoparticules d'un polymère de coordination à ligands CN (« *cyano-bridged coordination polymer nonoporticies* ») à base de « briques » (« *building blocks* »), motifs, mailles, cyanométallates de métal telles que hexa et octacyanométallates de métaux qui sont fixées, liées à un groupe organique d'un greffon, ledit greffon étant immobilisé, fixé chimiquement, généralement par covalence, à la surface de la membrane de filtration, à l'intérieur des pores de la membrane de filtration, et éventuellement à l'intérieur des pores du support.

On peut dire que la membrane supportée selon l'invention est une membrane supportée préparée par la croissance à la surface de la membrane de filtration, à l'intérieur des pores de la membrane de filtration, et éventuellement à l'intérieur des pores du support, de réseaux à ligands cyano (« *cyano-bridged network* ») en des points spécifiques de celui-ci, cette croissance étant réalisée par coordination successive de Mⁿ⁺ puis de [M'(CN)ₘ]^{x-}, éventuellement répétée.

On peut encore dire que le polymère est un polymère de Mₙ⁺/Alk⁺_{y}[M'(CN)ₘ]^{x-}.

Le polymère est un polymère dit « de coordination » car il établit une liaison entre les cations Mⁿ⁺, par exemple M²⁺, et par exemple, les cations M'³⁺, par l'intermédiaire des ligands CN : M²⁺-CN-M'³⁺.

Le rapport atomique M/M' est généralement voisin de 1.

Par « fixé chimiquement », on entend généralement que le greffon est lié, fixé par une liaison covalente à la surface de la membrane de filtration, à l'intérieur des pores de la membrane de filtration, et éventuellement à l'intérieur des pores du support.

Le groupe organique que l'on peut décrire comme un groupe fonctionnel d'ancrage des nanoparticules est un groupe apte à former une liaison organométallique avec le cation Mⁿ⁺.

Ce groupe peut être choisi parmi les groupes azotés et les groupes oxygénés. Des groupes préférés sont le groupe pyridine, et les groupes diamine bidentates tels que les groupes akylènediamine par exemple le groupe ethylène diamine -NH-(CH₂)₂-NH₂.

Le greffon comprend généralement un groupe de liaison tel qu'un groupe alkylène linéaire de 2 à 6 atomes de carbone comme un groupe -(CH₂)₂- qui relie ledit groupe organique, aussi appelé groupe fonctionnel d'ancrage, à un groupe assurant l'accrochage chimique, généralement par covalence du greffon à la surface de la membrane de filtration, à l'intérieur des pores de la membrane de filtration, et éventuellement à l'intérieur des pores du support.

Dans le cas d'une membrane ou d'un support dont la surface est essentiellement constituée par de la silice, ce groupe assurant l'accrochage covalent du greffon est, par exemple, un groupe SiO lié aux groupes silanols de la surface de la membrane ou du support.

Dans le cas d'une membrane ou d'un support dont la surface est essentiellement constituée par des oxydes de type TiO₂ ou ZrO₂, ce groupe assurant l'accrochage covalent du greffon est, par exemple, un groupe phosphonate lié aux groupes hydroxyles de la surface de la membrane ou du support.

Selon l'invention, le cyanométallate de métal tel qu'un hexacyanoferrate de métal de transition est obtenu par cristallisations successives et il est lié par une liaison organométallique forte (ou une liaison de coordination) au groupe organique ou groupe fonctionnel d'ancrage du greffon ; il adhère alors parfaitement à la membrane et éventuellement au support par l'intermédiaire du greffon fixé chimiquement, fortement, par covalence à cette membrane.

La membrane supportée selon l'invention se différencie notamment du matériau solide décrit dans le document WO-A2-2010/133689 qui est essentiellement constitué par un support (dans ce document le terme « support » ne revêt pas la même signification que dans la présente invention) en verre poreux, ne pouvant assurer aucune fonction de filtration.

En outre, il n'y a aucune mention ni aucune suggestion dans le document WO-A2-2010/133689 que le matériau de ce document puisse former une membrane de filtration et puisse être disposé sur un support.

L'homme du métier sait qu'une membrane de filtration est totalement différente par sa forme et par sa structure d'un simple support en verre poreux et identifie immédiatement les différences qui peuvent exister entre la membrane supportée selon l'invention et le support en verre poreux tel que mentionné dans le document WO-A2-2010/133689.

Les termes « membrane » et « filtration » impliquent *de facto* un certain nombre de caractéristiques intrinsèques qui ne sont en aucun cas celles d'un support en verre poreux.

La membrane supportée selon l'invention ne présente pas les inconvénients des matériaux de l'art antérieur, satisfait aux besoins et exigences énumérées plus haut, et apporte une solution aux problèmes posés par les matériaux de l'art antérieur.

La membrane supportée selon l'invention associe pour la première fois dans une seule et même entité la fonction de filtration des particules solides due à la membrane et la fonction d'extraction, fixation des cations métalliques due aux nanoparticules du polymère de coordination métallique à ligands CN.

La membrane supportée selon l'invention permet d'obtenir la filtration des particules solides présentes dans des liquides, tels que des solutions, couplée simultanément à l'extraction, fixation, des cations métalliques tels que les cations césium se trouvant dans ces liquides grâce à la fonctionnalisation de la membrane de filtration inorganiques et éventuellement du support.

La membrane de filtration supportée selon l'invention permet pour la première fois de capter, fixer les cations ce qui n'était possible jusqu'à présent avec aucune membrane inorganique.

La membrane selon l'invention permet également d'augmenter significativement la cinétique d'extraction des cations par rapport au verre poreux qui ne peut être utilisé qu'en colonne. La membrane selon l'invention est généralement mise en oeuvre en filtration tangentielle ce qui permet d'augmenter les débits et éviter le colmatage.

Un support de type verre poreux, utilisé dans un procédé en colonne (ou en cartouche), s'apparente plus à un filtre frontal avec une porosité constante sur toute son épaisseur et avec des tailles de pores inférieures à quelques µm.

Un procédé mis en oeuvre en colonne ou en lit fixe utilisant par exemple un verre poreux, est moins favorable à la perméabilité et entraîne généralement une perte de charge non négligeable.

Une membrane à structure poreuse asymétrique telle que la membrane selon l'invention permet de réduire significativement les pertes de charges et donc d'augmenter les débits de filtration et de décontamination. Ainsi, le débit de perméation est élevé ce qui implique une vitesse d'extraction plus rapide.

Selon l'invention, la membrane et son support sont des membranes et supports inorganiques.

Les avantages des membranes et supports inorganiques sont, entre autres, une grande résistance thermique, une grande résistance chimique aussi bien aux solvants organiques qu'aux composés chimiques agressifs comme les acides, les bases et les oxydants, une grande résistance mécanique qui permet d'utiliser des pressions élevées, et une grande résistance aux radiations. La résistance chimique et sous irradiation sera alors conditionnée par le greffon et l'hexacyanoferrate fixés sur la membrane de filtration et le support inorganiques. Ces entités sont résistantes chimiquement à des pH inférieurs à 11, et leurs tenues sous radiolyse sont également bonnes.

Il n'existe pas, dans la membrane selon l'invention, de cyanométallate de métal tel qu'un hexacyanoferrate de métal de transition libre au sein de la porosité qui pourrait être relargué par exemple lors du traitement d'une solution en vue d'en éliminer les polluants minéraux.

La membrane supportée selon l'invention comprend généralement une quantité de cyanométallate de métal, par exemple d'hexacyanoferrate de métal fixé de 1% à 10% en masse, de préférence de 2% à 3% en masse par rapport à la masse de la membrane lorsque les cyanométallates sont seulement fixés à la surface des pores de la membrane, ou par rapport à la masse de la membrane et du support lorsque les cyanométallates sont fixés à la surface des pores de la membrane et du support, cette valeur est à rapprocher de la valeur moyenne de 10% en masse pour les hexacyanoferrates imprégnés sur silice de l'art antérieur.

En résumé, en utilisant des membranes de filtration comme support au greffage, en plus du pouvoir extractant vis-à-vis des cations métalliques, et notamment du pouvoir extractant sélectif vis-à-vis des cations césium, dû aux nanoparticules d'hexacyanoferrates, les membranes selon l'invention, qui sont généralement choisies en fonction de la taille de leurs macropores dans le cas des membranes de microfiltration MF, ou d'ultrafiltration UF, permettent également, simultanément, la filtration des particules solides présentes dans le liquide, tel qu'une solution, à traiter.

Du fait de l'utilisation d'un système inorganique d'une part, et d'un complexant qui est notamment reconnu comme très sélectif vis-à-vis du césium, des liquides, tels que des solutions, diverses et complexes quant à leur composition, leur concentration, leur pH (par exemple inférieur à 11), la radiolyse éventuelle qu'ils ont subie, peuvent être traités.

L'invention concerne, en outre, un procédé de préparation de la membrane supportée décrite plus haut dans lequel on réalise les étapes successives suivantes :
a) on fournit une membrane supportée comprenant une membrane de filtration poreuse solide inorganique supportée sur un support poreux solide inorganique ;
b) on réalise la fixation chimique du greffon organique à la surface de la membrane de filtration, à l'intérieur des pores de la membrane de filtration, et éventuellement à l'intérieur des pores du support;
c) on met en contact la membrane de filtration poreuse solide inorganique à la surface de laquelle et à l'intérieur des pores de laquelle est fixé le greffon organique et le support poreux solide inorganique à l'intérieur des pores duquel est éventuellement fixé le greffon inorganique avec une solution contenant l'ion Mⁿ⁺, puis on lave une ou plusieurs fois la membrane supportée ainsi obtenue;
d) on met en contact la membrane supportée obtenue à l'issue de l'étape c) avec une solution d'un complexe de [M'(CN)ₘ]^{x-};
e) on lave une ou plusieurs fois la membrane supportée obtenue à l'issue de l'étape d;
f) on répète éventuellement les étapes c) à e).

Avantageusement, la fixation chimique du greffon organique à à la surface de la membrane de filtration, à l'intérieur des pores de la membrane de filtration, et éventuellement à l'intérieur des pores du support, peut être réalisée en mettant en contact la membrane de filtration poreuse et le support poreux avec une solution, telle qu'une solution dans l'eau ou le méthanol, de ₂(EtO)-(P=O)-(CH₂)₂-NH-(CH₂)₂-NH₂.

Avantageusement, la solution contenant l'ion Mⁿ⁺ peut être une solution, dans un solvant choisi parmi l'eau, les alcools tel que le méthanol, et leurs mélanges, d'un ou plusieurs sels contenant l'ion Mⁿ⁺.

De préférence, ladite solution est une solution aqueuse, c'est-à-dire dont le solvant est uniquement constitué par de l'eau.

Ladite solution peut aussi être une solution telle qu'une solution dans le méthanol, par exemple de M(BF₄)ₙ.

Avantageusement, le complexe de [M'(CN)ₘ]^{x-} répond à la formule suivante :

(Cat)ₓ[M'(CN)ₘ],

où M', m, et x ont la signification déjà donnée plus haut, et Cat est un cation choisi généralement parmi les cations de métaux alcalins tels que K ou Na, les ammoniums, les ammoniums quaternaires tels que le tétrabutylammonium (« TBA »), et les phosphoniums tels que le tétraphénylphosphonium (« PPh₄ »).

De préférence, la solution d'un complexe de [M'(CN)ₘ]^{x} est une solution aqueuse.

De préférence, les lavages sont réalisés avec de l'eau, notamment de l'eau ultrapure.

Avantageusement, les étapes c) à e) peuvent être répétées de 1 à 4 fois.

En résumé, ce procédé est simple, fait appel à des processus connus et éprouvés, est fiable et parfaitement reproductible, c'est-à-dire qu'il permet la préparation d'un produit final dont les caractéristiques, la composition, et les propriétés, sont parfaitement déterminées, et ne subissent pas de variations aléatoires.

Dans ce procédé, on fait croître des nanoparticules d'hexacyanoferrates à la surface de la membrane de filtration, à l'intérieur des pores de la membrane de filtration, et éventuellement à l'intérieur des pores du support de cette membrane. Ceci permet d'assurer une bonne accroche des nanoparticules sélectives des cations métalliques, tel que le Cs à la surface de la membrane de filtration, à l'intérieur des pores de la membrane de filtration, et éventuellement à l'intérieur des pores du support, d'obtenir tous les types d'hexacyanoferrates souhaités, et de maîtriser la taille des nanoparticules d'hexacyanoferrates.

L'invention concerne également un procédé pour séparer au moins un cation métallique et des particules solides à partir d'un milieu liquide les contenant, dans lequel on met en contact un courant du milieu liquide avec une première face de la membrane supportée, telle que décrite plus haut, opposée au support, on applique une différence de pression entre les deux faces opposées de la membrane supportée, moyennant quoi une première partie du courant du milieu liquide traverse la membrane supportée, est recueillie sur la seconde face de la membrane supportée et forme un perméat appauvri en cation métallique et en particules solides ; une seconde partie du courant du milieu liquide ne traverse pas la membrane supportée, est recueillie sur la première face de la membrane supportée et forme un retentât enrichi en particules solides ; et le cation métallique est immobilisé à la surface de la membrane de filtration poreuse solide inorganique, à l'intérieur des pores de la membrane de filtration poreuse solide inorganique, et éventuellement à l'intérieur des pores du support poreux solide inorganique.

Avantageusement, la différence de pression appliquée entre les deux faces opposées de la membrane supportée est de 0,1 à 6 bar, de préférence de 0,5 à 3 bar pour les membranes de microfiltration MF, et d'ultrafiltration UF, et elle est de l'ordre de 10 bar pour une membrane de nanofiltration NF.

Avantageusement, ledit milieu liquide peut être un milieu liquide aqueux, telle qu'une solution aqueuse.

Ledit milieu liquide peut être un liquide de procédé ou un effluent industriel.

Avantageusement, ledit milieu liquide peut être choisi parmi les liquides et effluents issus de l'industrie et des installations nucléaires et des activités mettant en oeuvre des radionucléides.

Généralement, ledit cation peut être présent à une concentration de 0,1 picogramme à 100 mg/L, de préférence de 0,1 picogramme à 10 mg/L.

Le terme « métal » recouvre aussi les isotopes et notamment les isotopes radioactifs dudit métal.

De préférence, le cation est un cation d'un élément choisi parmi Cs, Co, Ag, Ru, Fe et TI et les isotopes, notamment radioactifs de ceux-ci.

De préférence encore, le cation est un cation du ¹³⁴Cs, ou du ¹³⁷Cs.

Les particules solides ont généralement une taille de 0,1 µm à 10 µm.

Généralement, lesdites particules solides sont des particules inorganiques, notamment des particules d'oxydes de métaux ou de métalloïdes.

De préférence, le courant du milieu liquide est mis en contact avec la première face de la membrane supportée, en circulant parallèlement à ladite face, c'est-à-dire que l'on réalise une filtration tangentielle du courant de milieu liquide.

Ce procédé possède tous les avantages intrinsèquement liés à la membrane supportée selon l'invention, mise en oeuvre dans ce procédé, et qui ont déjà été décrits plus haut.

L'utilisation des membranes fonctionnalisées selon l'invention permet la fixation des cations métalliques, et notamment de cations du Cs, ainsi que simultanément, la séparation des particules solides.

### BRÈVE DESCRIPTION DES DESSINS

- La figure 1 est une représentation schématique du procédé selon l'invention, réalisé avec des greffons (OEt)₂-(P=O)-(CH₂)₂-NH-(CH)₂-NH₂.
- Les figures 2 et 3 sont d'autres représentations schématiques du procédé selon l'invention réalisé avec des greffons (OEt)₂-(P=O)-(CH₂)₂-NH-(CH)₂-NH₂,
- La figure 4 est une vue schématique d'une installation pour la mise en oeuvre du procédé de séparation selon l'invention.
- La figure 5 est une vue schématique d'une membrane supportée tubulaire susceptible d'être utilisée dans l'installation de la figure 4.
- La figure 6 est un graphique qui montre le spectre infrarouge d'une membrane en TiO₂ sur un support en TiO₂/Al₂O₃ fonctionnalisée par des nanoparticules d'hexacyanoferrate de cuivre (A) et le spectre infrarouge d'une membrane en TiO₂ sur un support en TiO₂/Al₂O₃, vierge, non-fonctionnalisée par des nanoparticules d'hexacyanoferrate de cuivre (membrane « blanc ») (B) (Exemple 1).
   En abscisse est portée la longueur d'onde (en cm⁻¹, et en ordonnée est portée la Transmittance (en %).
- La Figure 7 est un graphique qui montre l'évolution en fonction du temps de la concentration en Césium extrait dans le perméât (B), le retentât (C), et le réservoir (A) lors d'essais, tests, de filtration d'une eau ultrapure contenant du nitrate de césium à une concentration de 0,1 mMol/L (13 ppm) réalisés dans une installation pilote expérimentale de filtration.
   Les essais (Exemple 2) sont réalisés avec une membrane supportée selon l'invention, à savoir une membrane en TiO₂ sur un support en TiO₂/Al₂O₃ fonctionnalisée par des nanoparticules d'hexacyanoferrate de cuivre (membrane préparée dans l'Exemple 1).
   En ordonnée, est portée la concentration en Cs (en ppm) et en abscisse est porté le temps (en heures).

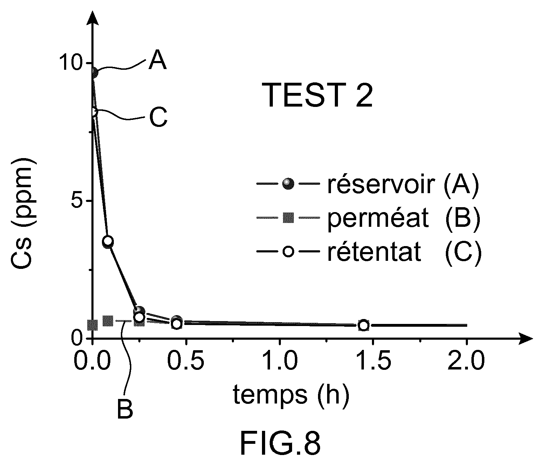

- La Figure 8 est un graphique qui montre l'évolution en fonction du temps de la concentration en Césium extrait dans le perméât (B), le retentât (C), et le réservoir (A) lors d'essais, tests, de filtration d'une eau ultra-pure contenant du nitrate de césium à une concentration de 0,1 mMol/L (13 ppm) avec une membrane supportée selon l'invention, à savoir une membrane en TiO₂ sur un support en TiO₂/Al₂O₃ fonctionnalisée par des nanoparticules d'hexacyanoferrate de nickel) dans une installation pilote expérimentale de filtration (Exemple 4).

En ordonnée est portée la concentration en Cs (en ppm) et en abscisse est porté le temps (en heures).

### EXPOSÉ DÉTAILLÉ DE MODES DE RÉALISATION PARTICULIERS

L'invention va maintenant être décrite plus en détail dans ce qui suit en faisant en particulier référence au procédé de préparation de la membrane supportée selon l'invention.

La première étape de ce procédé consiste à fournir une membrane poreuse inorganique supportée sur un support poreux solide inorganique.

Par membrane, on entend généralement un objet ou pièce se présentant sous la forme d'une couche définie par deux surfaces principales généralement parallèles. Une membrane peut être considérée comme une barrière sélective, formant une interface entre d'une part le fluide à traiter, et à purifier et d'autre part le fluide traité purifié.

Précisons ensuite que le terme « poreux » tel qu'il est utilisé dans la présente en relation avec la membrane ou le support de membrane, signifie que ce support contient des pores ou vides.

En conséquence, la densité de cette membrane poreuse ou de ce support poreux est inférieure à la densité théorique de la membrane non poreuse ou du support non poreux qui peuvent être alors qualifiés de membrane massive ou de support massif.

Les pores peuvent être reliés ou isolés mais dans la membrane poreuse et le support poreux selon l'invention, la majorité des pores sont reliés, en communication. On parle alors de porosité ouverte ou de pores interconnectés.

Généralement, dans la membrane poreuse et le support poreux de l'invention, les pores sont des pores percolants qui relient une première surface principale de ladite membrane ou dudit support à une seconde surface principale, généralement parallèle à ladite première surface principale, de ladite membrane ou dudit support.

Au sens de l'invention, une membrane ou un support est généralement considéré comme poreux lorsque sa densité est au-plus d'environ 95% de sa densité théorique.

Généralement, la porosité de la membrane de filtration est de 10% à 80% en volume, de préférence de 25% à 50% en volume.

Cette porosité est généralement mesurée par adsorption d'azote, ou porosimètrie mercure dans le cas des membranes de microfiltration.

La porosité du support peut généralement aller de 10% à 50% en volume, de préférence de 25% à 50% en volume.

L'épaisseur de la membrane de filtration est généralement de 0,1 à 100µm, de préférence de 2µm à 50µm.

La taille moyenne des pores de la membrane de filtration, qui est leur diamètre moyen dans le cas de pores à section circulaire, est généralement choisie en fonction de la taille des particules solides présentes dans le liquide telle qu'une solution à traiter et que l'on souhaite séparer.

Ainsi la membrane de filtration peut être une membrane de microfiltration avec une taille moyenne des pores de 2 à 0,1µm, par exemple de 0,1µm, 0,2µm, 0,45µm ou 0,8µm ; une membrane d'ultrafiltration avec une taille moyenne des pores de 1nm à 100nm, par exemple de 10nm à 100nm correspondant à un seuil de coupure de 300 à 1 kDa, par exemple de 15, 50, 150, ou 300 kDa ; ou une membrane de nanofiltration avec une taille moyenne des pores inférieure à 1nm.

La membrane de filtration peut ne comprendre qu'une seule couche mais elle comprend généralement plusieurs couches, par exemple de 2 à 10 couches.

Ainsi une membrane de microfiltration comprend généralement de 1 à 4 couches.

Cette membrane de filtration, telle qu'une membrane d'ultrafiltration, présente généralement une structure asymétrique avec une taille des pores qui diminue en allant du support vers la face active en contact avec le liquide à filtrer.

La membrane peut avoir une surface spécifique de 1 à 500 m²/g de préférence de 5 à 150 m²/g mesurée par adsorption d'azote, ou par porosimètrie mercure dans le cas des membranes de microfiltration.

Le support a généralement une taille de pores supérieure à celle de la membrane. La taille moyenne de pores du support est généralement de 1 à 15µm, idéalement 4 à 6µm.

Le support peut avoir une surface spécifique de 1 à 500 m²/g de préférence de 1 à 100 m²/g mesurée par adsorption d'azote ou par porosimètrie mercure dans le cas des membranes de microfiltration.

Selon l'invention, la membrane et son support sont des membranes et supports inorganiques.

Les avantages des membranes et supports inorganiques ont déjà été exposés plus haut.

La membrane de filtration peut être constituée par au moins un oxyde de métal ou de métalloïde.

De préférence, ledit oxyde est choisi parmi Al₂O₃, SiO₂, ZrO₂, TiO₂, et leurs mélanges.

Avantageusement, le support peut être constitué par un matériau choisi parmi les oxydes de métaux, les oxydes de métalloïdes, et leurs mélanges, tels que TiO₂, ZrO₂, Al₂O₃, SiO₂, Y₂O₃, CaO, MgO, et leurs mélanges; les carbures de métaux, les carbures de métalloïdes tels que SiC, et leurs mélanges ; les silicates tels que les composés de type mullite (silicate d'aluminium) et cordiérite (silicate alumineux ferromagnésien), et leurs mélanges ; les titanates de métaux tels que la tialite (titanate d'aluminium), les titanates de métalloïdes, et leurs mélanges ; et leurs mélanges.

De préférence, le support est constitué par du TiO₂, de l'Al₂O₃ ou un mélange de ceux-ci, et la membrane est constituée par du ZrO₂, du TiO₂, ou un mélange de ceux-ci.

La membrane peut revêtir diverses formes.

La membrane peut être une membrane plane, c'est-à-dire qu'elle se présente sous la forme d'une plaque auquel cas le support est également plan, ou bien la membrane peut être une membrane tubulaire, c'est-à-dire qu'elle se présente sous la forme d'un tube.

Ce tube peut avoir une section droite (constante) en forme de cercle (cylindre droit), d'ellipse, de polygone par exemple de triangle, d'hexagone, ou de carré.

La membrane tubulaire est entourée par un support qui est de même tubulaire.

Le support peut être un bloc ou monolithe dont la forme est généralement celle d'un cylindre de révolution dans lequel sont définis plusieurs canaux à section droite généralement circulaire ou polygonale, par exemple triangulaire, carrée, ou hexagonale, parallèles à l'axe dudit cylindre.

La paroi interne de ce canal ou de ces canaux est revêtue sur toute sa surface d'une couche inorganique qui forme une ou des membranes tubulaires.

Des membranes qui conviennent particulièrement dans le cadre de l'invention sont les membranes disponibles auprès la société Orelis Environnment sous la dénomination Kleansep^{®}.

Il s'agit de monolithes céramiques formant support qui comprennent des canaux dont les surfaces internes sont pourvues d'un revêtement de membrane.

Le Tableau 1 suivant indique les caractéristiques des membranes Kleansep^{®} qui peuvent être mises en oeuvre dans le cadre de l'invention.

**Tableau 1**

| **CARACTERISTIQUES** | |
|---|---|
| Support : | Monolithes TiO₂-Al₂O₃ |
| Diamètres / Longueur | 25mm / 1178mm |
| Nombre de canaux : | 7 - 8 - 19 - 31 - 52 |
| Diamètres des canaux : | 6 - 4,8 - 3,5 - 2,9 - 2,2mm |
| Membrane : | ZrO₂/TiO₂ |
| Résistance à la pression : | 80 bar |
| Pression de service : | 10 bar |
| Gamme de Ph : | 0-14 |
| Stérilisation : | 121°C |
| Limite de température : | Jusqu'à 150°C |

Ces membranes peuvent être stérilisées avec des oxydants et elles sont insensibles aux solvants et aux radiations.

Elles peuvent être utilisées en microfiltration, ultrafiltration ou nanofiltration.

Les étapes qui vont maintenant être décrites pour la fixation chimique du greffon organique et la préparation des nanoparticules d'un polymère de coordination à ligands CN liés à ces greffons à la surface de la membrane de filtration, à l'intérieur des pores de la membrane de filtration, et éventuellement à l'intérieur des pores du support, sont sensiblement analogues à celles du procédé décrit dans le document de Folch et *al. "*Synthesis and behaviour of size controlled cyano-bridged coordination polymer nanoparticles within hybrid mesoporous silice", (2008), New Journal of Chemistry, Vol.32, Nb. 2, 273-282, et dans le document WO-A2-2010/133689, à la différence toutefois que dans ces documents, le support poreux utilisé n'est pas une membrane et éventuellement un support membranaire, mais un support poreux spécifique respectivement en silice mésoporeuse ou en verre poreux, et également à la différence que, selon l'invention ces étapes, ce greffage, peuvent être réalisés en mode dynamique par exemple directement dans l'installation pour la mise en oeuvre du procédé de séparation décrit plus bas, telle qu'une installation pilote de filtration permettant ainsi une plus grande capacité de fixation chimique.

On pourra donc se référer à ces documents pour ce qui concerne notamment les réactifs et conditions opératoires mis en oeuvre dans ces étapes mais aussi pour la description des nanoparticules et de leur attachement à la surface des pores par l'intermédiaire du greffon.

On réalise au cours d'une première étape la fixation chimique du greffon organique, aussi appelé complexe organique, à la surface de la membrane de filtration, à l'intérieur des pores de la membrane de filtration, et éventuellement à l'intérieur des pores du support.

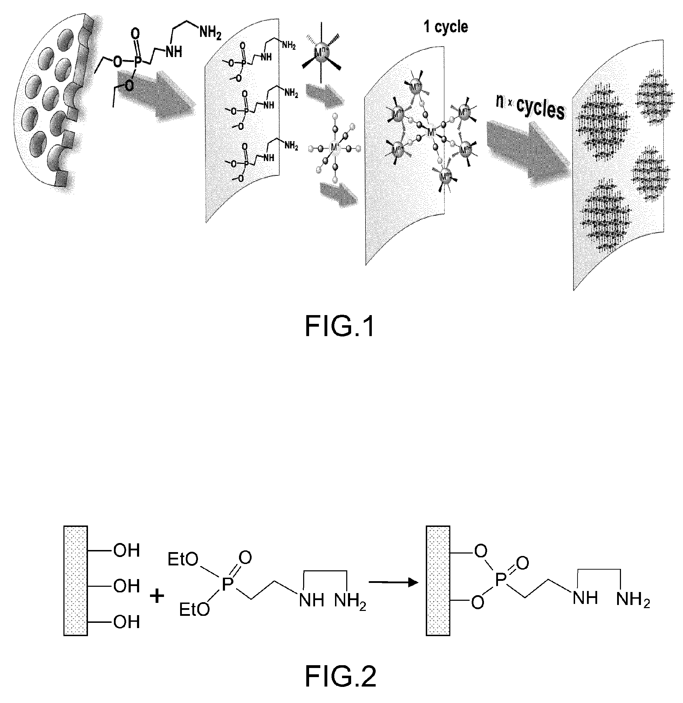

Cette étape peut aussi être appelée étape de fonctionnalisation (voir figures 1 et 2).

Autrement dit, au cours de cette première étape on réalise le greffage du complexe organique à la surface de la membrane de filtration, à l'intérieur des pores de la membrane de filtration, et éventuellement à l'intérieur des pores du support. Le greffon organique comprend un groupe organique, que l'on peut dénommer groupe fonctionnel d'ancrage des nanoparticules.

Un groupe fonctionnel d'ancrage des nanoparticules est un groupe apte à former une liaison organométallique ou de coordination avec le cation Mⁿ⁺, autrement dit un groupe capable de complexer le cation Mⁿ⁺.

Des exemples de tels groupes organiques ont déjà été cités plus haut.

On peut notamment mentionner les groupes organiques azotés, les groupes organiques oxygénés, et les groupes organiques phosphorés.

Un groupe organique préféré est le groupe bidentate diaminoéthylène comme cela est représenté sur les figures 1 et 2.

Le groupe organique, groupe fonctionnel d'ancrage, peut être lié directement à la surface de la membrane de filtration, à l'intérieur des pores de la membrane de filtration, et éventuellement à l'intérieur des pores du support, mais il est généralement lié, fixé chimiquement à la surface de la membrane de filtration, à l'intérieur des pores de la membrane de filtration, et éventuellement à l'intérieur des pores du support, par l'intermédiaire d'un groupe d'accrochage fixé, lié chimiquement, généralement par une liaison covalente à la surface de la membrane de filtration, à l'intérieur des pores de la membrane de filtration, et éventuellement à l'intérieur des pores du support.

Le greffon comprend ainsi un groupe organique, aussi appelé groupe fonctionnel d'ancrage, et un groupe assurant l'accrochage covalent du greffon à la surface de la membrane de filtration, à l'intérieur des pores de la membrane de filtration, et éventuellement à l'intérieur des pores du support.

Généralement, le groupe fonctionnel d'ancrage et le groupe d'accrochage du greffon organique sont reliés par l'intermédiaire d'un bras, groupe de liaison tel qu'un groupe alkylène linéaire de 2 à 6 atomes de carbone comme un groupe -(CH₂)₂- (voir les figures 1 et 2).

Le groupe assurant l'accrochage covalent du greffon peut être choisi parmi les groupes silanes tels que les groupes trialcoxysilane, par exemple les groupes triéthoxysilane ou triméthoxysilane et parmi les groupes phosphonates tels que les groupes dialkylphosphonate par exemple diéthylphosphonate (voir les figures 1 et 2).

Les groupes silanes et phosphonates permettent l'accrochage covalent du greffon en réagissant avec les groupes hydroxyles qui se trouvent généralement à la surface de la membrane de filtration, à l'intérieur des pores de la membrane et à l'intérieur des pores du support. La liaison entre d'une part la surface de la membrane de filtration, la surface interne des pores de la membrane de filtration, et éventuellement la surface interne des pores du support, et d'autre part le greffon est alors une liaison -O-Si ou une liaison -O-P comme cela est représenté sur les figures 1, 2, et 3.

Dans le cas d'une membrane de filtration dont la surface et la surface interne des pores sont essentiellement constituées par de la silice, ou d'un support dont la surface interne des pores est essentiellement constituée par de la silice, le groupe assurant l'accrochage covalent du greffon réagit avec les groupes silanols de la surface de la membrane, de la surface interne de la membrane de filtration, et éventuellement avec les groupes silanols de la surface interne du support.

Dans le cas d'une membrane dont la surface et la surface interne des pores est essentiellement constituée par des oxydes de titane et/ou de zirconium, ou d'un support dont la surface interne des pores est essentiellement constituée par des oxydes de titane et/ou de zirconium, l'accrochage se fera préférentiellement à l'aide d'un groupement phosphonate permettant ainsi l'utilisation de solutions aqueuses lors de l'étape de greffage.

Pour obtenir la fixation du greffon à la surface de la membrane de filtration, à l'intérieur des pores de la membrane de filtration, et éventuellement à l'intérieur des pores du support, on met donc en contact cette membrane et ce support membranaire avec un composé (par simplification greffon désigne aussi bien ce composé avant fixation que ce composé une fois fixé) comprenant ledit groupe fonctionnel d'ancrage, un groupe d'accrochage capable de se lier chimiquement, généralement par covalence, à la surface de la membrane de filtration, à l'intérieur des pores de la membrane de filtration, et éventuellement à l'intérieur des pores du support, et éventuellement un groupe de liaison reliant ledit groupe fonctionnel d'ancrage, au groupe d'accrochage.

Comme on l'a déjà vu, ce groupe d'accrochage peut être choisi par exemple parmi les groupes trialcoxysilane ou les groupes dialkylphosphonate, qui réagissent avec les groupes hydroxyle qui peuvent être présents à la surface de la membrane de filtration, à l'intérieur des pores de la membrane de filtration, et à l'intérieur des pores du support.

Généralement, la mise en contact est réalisée en mettant en contact la membrane supportée (à savoir la membrane de filtration sur le support) avec une solution dudit composé comprenant un groupe fonctionnel d'ancrage, un groupe d'accrochage et éventuellement un groupe de liaison dans un solvant.

Ainsi, on peut mettre en contact la membrane et le support membranaire avec une solution de phosphonate d'amine bidentate (voir Figure 2) ou dans le cas de la pyridine avec une solution de (CH₃O)₃Si(CH₂)₂C₅H₄N dans un solvant.

Un solvant préféré dans le cas du phosphonate d'amine bidentate est l'eau distillée ou ultrapure et un solvant préféré dans le cas de (CH₃O)₃Si(CH₂)₂C₅H₄N est le toluène.

La mise en contact peut être réalisée en mode dynamique, c'est-à-dire que la membrane et le support membranaire sont mis en contact avec un courant de la solution du composé qui circule en circuit fermé.

Ou bien, la mise en contact peut être réalisée en « mode statique ». Par exemple, la membrane et le support membranaire sont placés dans un récipient contenant la solution et le solvant est porté à reflux.

La durée de la mise en contact est généralement de 4 à 96 heures, par exemple de 96 heures en « mode dynamique », et de 12 à 48 heures, par exemple de 24 heures en « mode statique ».

A l'issue de la mise en contact, on procède généralement à un rinçage de la membrane par exemple avec de l'eau distillée ou ultra-pure, par exemple pendant une durée de 1 heure, cette durée est la même, en mode dynamique ou en mode statique.

A la fin de cette première étape, on obtient donc une membrane de filtration fonctionnalisée par des groupes organiques tels que des groupes éthylène diamine (voir figure 2), et éventuellement un support fonctionnalisé par lesdits groupes organiques.

On procède ensuite dans une deuxième étape à la croissance à la surface de la membrane de filtration, à l'intérieur des pores de la membrane de filtration, et éventuellement à l'intérieur des pores du support membranaire de nanoparticules d'un polymère de coordination métallique à ligands CN.

Cette croissance est réalisée en deux étapes successives, éventuellement répétées.

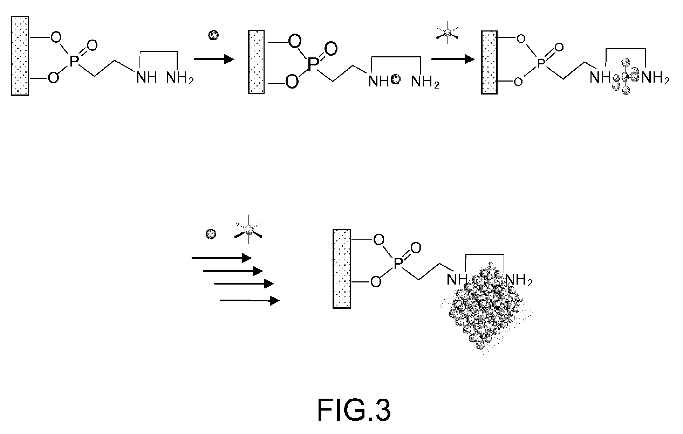

On commence par mettre en contact la membrane de filtration à la surface de laquelle et à l'intérieur des pores de laquelle est fixé le greffon organique, et le support à l'intérieur des pores duquel est éventuellement fixé le greffon organique, avec une solution contenant l'ion Mⁿ⁺, généralement sous la forme d'un sel métallique (voir figures 1 et 3).

Cette solution est une solution dans un solvant choisi généralement parmi l'eau, les alcools tel que le méthanol, et leurs mélanges, par exemple les mélanges d'eau et d'un ou plusieurs alcools.

Le solvant préféré est l'eau ultra pure.

Le sel de métal contenu dans cette solution est un sel dont le métal est généralement choisi parmi les métaux susceptibles de donner un cyanométallate de ce métal, tel qu'un hexacyanoferrate de ce métal, qui soit insoluble.

Ce métal peut être choisi parmi tous les métaux de transition, par exemple parmi le cuivre, le cobalt, le zinc, le nickel et le fer etc. L'ion Mⁿ⁺ pourra donc être choisi parmi les ions Fe²⁺, Ni²⁺, Fe³⁺, Co²⁺, Cu²⁺, et Zn²⁺.

Le sel de métal peut être par exemple un nitrate, un sulfate, un chlorure, un acétate, un tétrafluoroborate, éventuellement hydraté, d'un de ces métaux M.

Par exemple, il peut s'agir de tétrafluoroborate de cuivre dans le cas de la Figure 3.

La concentration du sel de métal dans la solution est de préférence de 0,01 à 1 mol/L, de préférence encore de 0,01 à 0,05 mol/L.

La quantité de sel utilisée est par ailleurs de préférence environ de 0,1 à 1 mmol/g de membrane et de support membranaire éventuel traité.

Avantageusement, la solution contenant l'ion Mⁿ⁺ peut être une solution dans l'eau ou dans un alcool tel que le méthanol, ou une solution dans un mélange d'eau et d'un ou plusieurs alcool(s).

Avantageusement, cette solution contenant l'ion Mⁿ⁺ peut être une solution telle qu'une solution dans le méthanol de [M(H₂O)₆]Cl₂ où M est de préférence Ni, Fe ou Co, ou de [M(H₂0)₆]Cl₃ où M est Fe, ou encore une solution de M(BF₄)₂ où M est par exemple Cu.

La mise en contact que l'on peut aussi qualifier d'imprégnation de la membrane et du support membranaire est effectuée en général à température ambiante, et sa durée est généralement de 4 à 96 heures.

Cette mise en contact peut être réalisée en mode statique, de préférence sous agitation, auquel cas sa durée est généralement de 12 à 96 heures, ou bien en mode dynamique, auquel cas sa durée est généralement de 4 à 24 heures.

A l'issue de cette mise en contact, on obtient une membrane et un support membranaire dans lesquels des cations Mⁿ⁺ sont liés par une liaison organométallique ou de coordination aux groupes fonctionnels d'ancrage du greffon.

Ainsi, dans le cas de l'éthylénediamine (voir figures 1 et 3), une liaison s'établit entre l'un des atomes d'azote et le cation Mⁿ⁺ (voir figures 1 et 3), et dans le cas de la pyridine, une liaison s'établit entre l'azote du cycle et le cation Mⁿ⁺.

A la fin de la mise en contact, on retire généralement la membrane et le support membranaire de la solution.

En mode dynamique, on ne retire pas la membrane et le support membranaire de la solution, mais on réalise le lavage directement pendant un temps donné, par exemple pendant 1h.

Puis, on lave une ou plusieurs fois, par exemple 1 à 3 fois la membrane et le support membranaire, de préférence avec le même solvant que le solvant de la solution de Mⁿ⁺, tel que l'eau ou le méthanol.

Cette opération de lavage permet d'éliminer le sel de métal en excès et d'obtenir un produit stable à la composition parfaitement définie.

On met ensuite en contact la membrane et le support membranaire qui ont réagi avec le cation de métal Mⁿ⁺ comme décrit ci-dessus avec une solution d'un complexe (que l'on peut éventuellement appeler sel) de Catₓ[M'(CN)ₘ]^{x-}, par exemple de Kₓ[M'(CN)ₘ]³⁻ (voir figures 1 et 3).

Cette solution est une solution dans un solvant choisi parmi l'eau, les alcools, et leurs mélanges, par exemple les mélanges d'eau et d'un ou plusieurs alcool(s).

Le solvant préféré est l'eau ultra pure.

La mise en contact que l'on peut aussi qualifier d'imprégnation de la membrane et du support membranaire est effectuée en général à température ambiante, et sa durée est généralement de 2 à 96 heures.

Cette mise en contact peut être réalisée en mode statique, de préférence sous agitation, auquel cas sa durée est généralement de 12 à 96 heures, ou bien en mode dynamique, auquel cas sa durée est généralement de 2 à 24 heures.

Le complexe répond généralement à la formule suivante :

(Cat)ₓ[M'(CN)ₘ],

où M', m, et x ont la signification déjà donnée plus haut, et Cat est un cation choisi généralement parmi les cations de métaux alcalins Alk tels que K ou Na, le cation ammonium, les ammoniums quaternaires tels que le Tétrabutylammonium (« TBA »), et les cations phosphoniums tels que le tétraphénylphosphonium (« PPh₄ »). Des complexes préférés sont les complexes de formule Kₓ[M'(CN)ₘ].

D'autres complexes qui peuvent être utilisés sont les complexes de formule [N(C₄H₉)₄]ₓ[M'(CN)ₘ], comme les complexes de formule [N(C₄H₉)₄]₃[M'(CN)ₘ] tels que [N(C₄H₉)₄]₃[Fe(CN)₆], [N(C₄H₉)₄]₃[Mo(CN)₈], et [N(C₄H₉)₄]₃[Co(CN)₆].

La solution par exemple aqueuse de complexe ou de sels mise en oeuvre a une concentration variable, c'est-à-dire que la concentration du sel ou du complexe est généralement de 0,001 à 1 mol/L, de préférence de 0,001 à 0,05 mol/L.

D'autre part, la solution de sel ou de complexe de Cat_{y}[M'(CN)ₘ]^{x-} mise en oeuvre est généralement préparée de telle sorte, que le rapport massique du sel ou du complexe à la quantité du support d'imprégnation constitué par la membrane et le support membranaire initiaux, soit de préférence de 0,1 à 5 mmol/g de support membranaire.

On obtient ainsi la fixation de la partie anionique [M'(CN)ₘ]^{x-}, par exemple [Fe(CN)₆]⁴⁻, du sel ou du complexe sur les cations Mⁿ⁺ (voir figures 1 et 3), cette fixation se fait par formation de liaisons de type covalente qui sont relativement fortes selon le milieu, et cette fixation est généralement quantitative, c'est-à-dire que tous les cations Mⁿ⁺ réagissent. La fixation ne présente donc aucun caractère aléatoire.

A l'issue de cette mise en contact, on retire généralement la membrane et le support membranaire de la solution. Toutefois cela n'est pas nécessaire en mode dynamique.

On lave ensuite une ou plusieurs fois, par exemple 1 à 3 fois, la membrane et le support membranaire, de préférence avec le même solvant que le solvant de la solution de sel ou de complexe, tel que le méthanol ou l'eau ultra pure.

Cette opération de lavage a pour but d'éliminer les sels et les complexes de [M'(CN)ₘ]^{x-} qui n'ont pas été fixés sur les cations Mⁿ⁺ et permet d'obtenir une membrane dans laquelle il n'existe plus de [M'(CN)ₘ]^{x-} libre, non lié, pouvant être relargué.

La succession des étapes de mise contact de la membrane et du support membranaire avec le cation de métal Mⁿ⁺ et de lavage (une ou plusieurs fois), puis de mise en contact de la membrane et du support membranaire avec une solution d'un sel ou d'un complexe de [M'(CN)ₘ]^{x-}, par exemple de [M'(CN)ₘ]³, et de lavage (une ou plusieurs fois), peut n'être effectuée qu'une seule fois, ou bien elle peut être répétée, généralement de 1 à 10 fois , par exemple de 1 à 4 ou 5 fois (voir figures 1 et 3), on peut ainsi parfaitement régler la taille des nanoparticules.

La teneur pondérale en fixateur minéral, c'est-à-dire en hexacyanoferrate de métal insoluble fixé sur le polymère échangeur d'anions, est généralement de 1 à 10%, par exemple de 3%, par rapport à la masse de la membrane et du support membranaire éventuel.

La membrane supportée selon l'invention peut être mise en oeuvre notamment, mais non exclusivement, dans un procédé pour séparer au moins un cation métallique et des particules solides à partir d'un milieu liquide les contenant, dans lequel on met en contact un courant du milieu liquide avec une première face de la membrane supportée, telle que décrite plus haut, opposée au support, on applique une différence de pression entre les deux faces opposées de la membrane supportée, moyennant quoi une première partie du courant du milieu liquide traverse la membrane supportée, est recueillie sur la seconde face de la membrane supportée et forme un perméat ou filtrat appauvri en cation métallique et en particules solides ; une seconde partie du courant du milieu liquide ne traverse pas la membrane supportée, est recueillie sur la première face de la membrane supportée et forme un retentât ou concentrât enrichi en particules solides ; et le cation métallique est immobilisé à l'intérieur des pores de la membrane poreuse solide inorganique et éventuellement du support poreux solide inorganique.

Le procédé selon l'invention présente tous les avantages inhérents à la mise en oeuvre dans ce procédé de la membrane supportée selon l'invention. La plupart de ces avantages ont déjà été exposés plus haut.

Le procédé selon l'invention permet en une seule étape, une seule opération simple, réalisée uniquement avec la membrane supportée selon l'invention, la séparation simultanée des cations metalliques et des particules solides, alors qu'il était nécessaire dans les procédés de l'art antérieur de réaliser deux opérations successives distinctes dans des appareils différents pour séparer respectivement les particules solides et les cations métalliques.

Le procédé selon l'invention ne présente donc pas les inconvénients des procédés de l'art antérieur et apporte une solution aux problèmes posés par les procédés de l'art antérieur.

Les membranes selon l'invention, du fait de leurs excellentes propriétés en terme de fixation des cations métalliques telles qu'une excellente capacité d'échange, une excellente sélectivité, une vitesse de réaction élevée, ainsi qu'en terme de filtration des particules solides conviennent particulièrement à une mise en oeuvre dans un tel procédé.

Cette excellente efficacité de fixation des cations est obtenue avec des quantités réduites de fixateur minéral tel que d'hexacyanoferrate insoluble.

Les milieux liquides, tels que des solutions, en particulier aqueuses, qui peuvent être traités par le procédé de l'invention et avec la membrane supportée selon l'invention, sont très variés, et peuvent même contenir par exemple des agents corrosifs, acides, ou autres, du fait de l'excellente stabilité chimique de la membrane selon l'invention.

La membrane supportée selon l'invention est utilisable en particulier sur une très large gamme de pH. Par exemple, on pourra traiter des solutions aqueuses nitriques de concentration allant par exemple de 0,1 à 3M, des solutions acides ou neutres jusqu'à un pH 11, etc.

Le cation susceptible d'être fixé dans le procédé selon l'invention peut être tout cation de métal. Généralement ce cation métallique se trouve sous forme dissoute dans le milieu liquide, tel qu'une solution.

Le terme « métal » recouvre aussi les isotopes et notamment les isotopes radioactifs dudit métal.

De préférence, le cation est un cation d'un élément choisi parmi TI, Fe, Cs, Co, Ru, Ag, et les isotopes, en particulier les isotopes radioactifs de ceux-ci, parmi lesquels on peut citer ⁵⁸Co, ⁶⁰Co, ⁵⁵⁻⁵⁹Fe, ¹³⁴Cs, ¹³⁷Cs, ^{103,105,105,107}Ru. Le cation métallique est en particulier le cation Césium Cs⁺ et notamment les cations ¹³⁴Cs⁺ et ¹³⁷Cs⁺, ou le Thallium Tl²⁺.

Une utilisation préférée de la membrane supportée selon l'invention est ainsi la fixation du césium radioactif qui contribue à une grande part de l'activité gamma des liquides de l'industrie nucléaire et qui est fixé sélectivement par les hexacyanoferrates.

La concentration du ou des cation(s) peut varier entre de larges limites : par exemple, elle peut être pour chacun de ceux-ci de 0,1 picogramme à 100 mg/L, de préférence de 0,01 mg/L à 10 ng/L.

Les particules solides ont généralement une taille de 0,1µm à 10µm, et leur forme peut être quelconque.

La taille des pores de la membrane est choisie en fonction de la taille de ces particules afin qu'elles soient arrêtées par la membrane.

La composition des particules solides dépend des effluents à traiter et peut être extrêmement variée.

Généralement, lesdites particules solides sont des particules inorganiques, notamment des particules d'oxydes de métaux ou de métalloïdes, par exemple d'oxydes de fer, nickel, manganèse, etc.

La solution à traiter par le procédé de l'invention est de préférence une solution aqueuse, qui peut outre le ou les cation(s) à fixer et les particules solides, contenir d'autres sels en solution tels que NaNO₃ ou LiNO₃ ou encore Al(NO₃)₃ ou tout autre sel soluble de métal alcalin ou alcalino-terreux à une concentration pouvant atteindre jusqu'à 2 moles/L. La solution peut également contenir, comme indiqué plus haut, des acides, bases, et même des composés organiques.

La solution à traiter peut également être une solution dans un solvant organique pur tel que l'éthanol (alcool absolu), l'acétone ou autre, dans un mélange de ces solvants organiques, ou dans un mélange d'eau et d'un ou de plusieurs de ces solvants organiques miscibles à l'eau.

La membrane selon l'invention présente ainsi l'avantage de pouvoir traiter des solutions qui ne peuvent être traitées avec des résines organiques.

Cette solution peut consister en un liquide de procédé ou en un effluent industriel ou autre qui peut être issu en particulier de l'industrie et des installations nucléaires ou de toute autre activité liée au nucléaire.

Parmi les liquides et effluents divers de l'industrie nucléaire, des installations nucléaires et des activités mettant en oeuvre des radionucléides qui peuvent être traités par le procédé de l'invention, on peut citer par exemple les eaux de refroidissement des centrales, et tous les effluents divers entrant en contact avec des radioisotopes tels que toutes les eaux de lavage, les solutions de régénération de résines etc.

Il est toutefois évident que le procédé selon l'invention peut également être mis en oeuvre dans d'autres domaines d'activités, industriels ou autres, non nucléaires.

Ainsi, les hexacyanoferrates fixent sélectivement le thallium et cette propriété pourrait être mise à profit dans l'épuration des effluents de cimenterie pour réduire ou supprimer les rejets et émissions de cet élément qui est un poison violent.

Pour mettre en oeuvre le procédé de l'invention, on peut utiliser une technique de filtration frontale mais on utilisera de préférence une technique de filtration tangentielle qui limite le phénomène d'accumulation des particules solides à la surface de la membrane, car la circulation du retentât ou concentrât provoque une forte turbulence au voisinage de la membrane. De plus, ce type de filtration permet de traiter en continu des quantités importantes de solution, avec un fort débit de celles-ci.

On peut utiliser pour la filtration tangentielle des membranes planes ou tubulaires.

Le temps de contact du milieu liquide à traiter avec la membrane supportée selon l'invention est variable, et peut aller, par exemple, de 1 minute à 10 heures, notamment de 10 minutes à 1 heure, pour un fonctionnement en continu.

A l'issue du procédé de séparation, les cations métalliques se trouvant dans la solution, sont immobilisés à la surface de la membrane de filtration, à l'intérieur des pores de la membrane de filtration, et éventuellement à l'intérieur des pores du support par sorption c'est-à-dire par échange ionique ou adsorption au sein des nanoparticules, au sein de la structure des nanoparticules, elles-mêmes liées chimiquement à la surface des parois des pores de la membrane et éventuellement du support.

A l'issue de l'extraction des cations tel que des cations Cs et de la séparation des particules, la membrane de filtration ainsi que son support du fait qu'ils sont tous deux de nature inorganique constituent des déchets compatibles avec la filière de cimentation, voire vitrification si l'activité de la membrane de filtration et de son support est trop élevée.

Le perméat ou filtrat recueilli est appauvri en cations métalliques et en particules solides.

Cet appauvrissement en cations métalliques, dépend de la concentration initiale en cations métalliques, et de la quantité d'effluent à traiter. On ne peut le quantifier à l'avance : en général, dans le cas notamment d'effluents radioactifs, on se fixe par exemple un Facteur de Décontamination (FD) qui conditionne ensuite le temps d'utilisation de la membrane en fonction de la concentration des effluents à traiter

Le retentât ou concentrât recueilli est enrichi en particules solides.

La remarque formulée plus haut pour ce qui concerne l'appauvrissement s'applique de la même manière à cet enrichissement qui dépend de la concentration initiale en particules solides, et de la quantité d'effluent à traiter. On ne peut le quantifier à l'avance.

Dans le cas du traitement d'effluents radioactifs, le perméât peut même être alors une solution complètement décontaminée (avec le FD recherché), et donc peut être rejeté dans l'environnement.

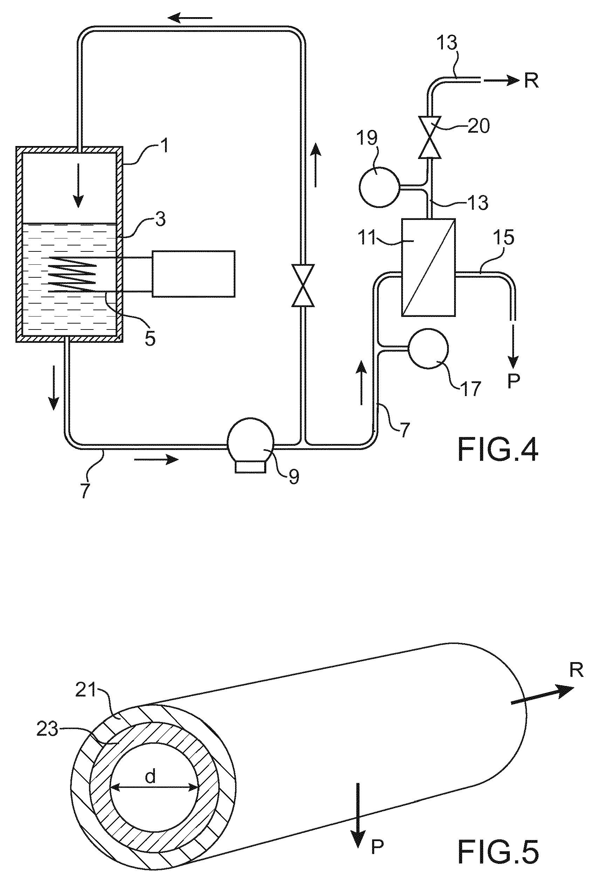

Le retentât ne présente plus de cations polluants mais présente des particules en suspension. Il peut être considéré comme un effluent chimique et non plus radiologique. La membrane est un déchet radiologique inorganique et peut alors être transféré vers les filières de déchets classiques comme la cimentation ou la vitrification ou peut être directement mis en stockage. Sur la figure 4, on a représenté une installation de filtration tangentielle pour la mise en oeuvre du procédé de séparation selon l'invention, qui comprend un réservoir 1 contenant l'effluent 3 à traiter qui peut être maintenu à une température appropriée par un cryostat 5.

L'effluent à traiter est introduit à partir du réservoir 1 par une conduite 7 munie d'une pompe 9 dans le module de filtration 11 duquel on soutire le retentât R par la conduite 13 et le perméat P par la conduite 15. Les conduites 7 et 13 sont équipées de manomètres 17 et 19 et la conduite 13 est munie d'une vanne 20.

Dans le dispositif ou module de filtration 11, on peut utiliser une ou plusieurs membranes supportées tubulaires telles que celle représentée sur la figure 5 ou bien un ou plusieurs monolithes tels que décrits plus haut.

Sur la figure 5, on voit en perspective, une membrane supportée tubulaire comportant un support 21 en matériau inorganique, revêtue d'une couche de membrane 23 inorganique.

Le diamètre interne du tube d est par exemple de 10 mm, l'épaisseur de la couche de membrane inorganique 23 peut être de 2 à 50µm et l'épaisseur du support peut être de 3mm. Avec des tubes de ce type, on fait circuler l'effluent à traiter à l'intérieur du tube; on recueille ainsi le retentât R à la sortie du tube et le perméat P à la périphérie du tube.

Un ensemble de tubes de ce type ou un ensemble de monolithes tels que décrits plus haut, peut être monté de façon classique dans une enceinte entre deux plaques ou brides d'extrémités qui déterminent avec l'enceinte un espace d'introduction de l'effluent et un espace de collection du retentât, le perméat étant recueilli dans l'enceinte.

De tels modules sont notamment commercialisés par la société ORELIS Environnement sous la dénomination de Module Kleansep™ K01, K03, K07, K19, K37, K99.

L'invention va maintenant être décrite en référence aux exemples suivants donnés à titre illustratif et non limitatif.

### Exemples :

Dans les exemples 1 à 4 qui suivent :
- on a synthétisé une membrane selon l'invention par greffage, dans l'eau, d'un greffon à groupement phosphonate dans une membrane de TiO₂ sur un support TiO₂/Al₂O₃, puis croissance, dans le méthanol, de nanoparticules d'hexacyanoferrate de cuivre dans ladite membrane greffée (Exemple 1).
- des essais d'extraction du césium à partir d'une solution de nitrate de césium ont ensuite été réalisés en utilisant la membrane préparée dans l'exemple 1 (Exemple 2).
- on a synthétisé une membrane selon l'invention par greffage, dans l'eau, d'un greffon à groupement phosphonate dans une membrane de TiO₂ sur un support TiO₂/Al₂O₃, puis croissance, dans l'eau, de nanoparticules d'hexacyanoferrate de nickel dans la dite membrane greffée (Exemple 3).
- des essais d'extraction du césium à partir d'une solution de nitrate de césium ont ensuite été réalisés en utilisant la membrane préparée dans l'exemple 3 (Exemple 4).

**Exemple 1 :** Greffage, dans l'eau, d'un greffon à groupement phosphonate dans une membrane de TiO₂ sur un support TiO₂/Al₂O₃, puis croissance, dans le méthanol, de nanoparticules d'hexacyanoferrate de cuivre dans ladite membrane greffée.

### Dispositif expérimental.

Le dispositif, montage, utilisé pour le greffage du greffon à groupement phosphonate dans la membrane -en d'autres termes pour la fonctionnalisation de la membrane- puis pour la croissance des nanoparticules, comprend une colonne de chromatographie dans laquelle est disposée la membrane. Le sommet de la colonne est relié à sa base par l'intermédiaire d'un tuyau souple extérieur sur lequel est placée une pompe péristaltique assurant une circulation de liquide en circuit fermé dans la colonne.

A l'aide de ce dispositif, on peut réaliser un greffage du greffon puis une croissance des nanoparticules en mode dynamique afin de favoriser l'insertion des nanoparticules.

Une fois que la membrane a été placée dans le dispositif, le volume de liquide qu'il peut contenir est de 60 mL.

La membrane utilisée est une membrane de TiO₂ sur un support TiO₂/Al₂O₃ monocanal de microfiltration présentant une porosité de 0,2 µm et une surface spécifique de la membrane de l'ordre de 0,2 m²/g.

### Greffage du greffon à groupement phosphonate :

Le greffon à groupement phosphonate est un phosphonate d'amine bidentate de formule ₂(EtO)-(P=O)-(CH₂)₂-NH-(CH₂)₂-NH₂.

Le greffage de ce phosphonate d'amine bidentate s'effectue dans l'eau ultra-pure.

La membrane utilisée y compris le support a une masse de 35,5g et on utilise pour le greffage une masse de 0,657g de greffon.

Ce greffon est dilué dans 60 mL d'eau ultrapure. La membrane supportée étant placée dans le dispositif, montage de greffage en mode dynamique décrit plus haut, on fait circuler dans ce dispositif la solution de greffon dans l'eau pendant 4 jours.

Après cette étape de greffage, la membrane et son support sont lavés à l'eau ultrapure pendant 1 heure.

### Croissance des nanoparticules :

60 mL d'une première solution de Cu(BF₄)₂ à une concentration 10⁻² mol/L dans le méthanol sont introduits dans le dispositif, montage, de greffage en mode dynamique décrit plus haut.

Cette solution circule dans le dispositif pendant au moins 2 heures. Puis un lavage au méthanol pur est effectué pendant 1 heure.

60 mL d'une seconde solution de TBA₃Fe(CN)₆ à une concentration de 10⁻² mol/L dans le méthanol sont alors introduits dans le dispositif de greffage en mode dynamique décrit plus haut.

Cette solution circule dans le système pendant au moins 2 heures. Puis un lavage au méthanol pur est effectué pendant au moins 1 heure.

Ce cycle complet d'imprégnation qui comprend deux étapes de mise en contact de la membrane avec des solutions différentes, chacune de ces étapes de mise en contact étant suivie par une étape de lavage, est répété 4 fois.

Finalement, un lavage à l'eau pendant au moins 2 heures est effectué.

### Caractérisation de la membrane après fonctionnalisation :

Après les 5 cycles de fonctionnalisation, autrement dit après la croissance des nanoparticules, la membrane supportée fonctionnalisée change de couleur et devient rougeâtre, ce qui est le signe de la présence d'hexacyanoferrate de cuivre. Ce changement de couleur de la membrane après fonctionnalisation apparaît clairement lorsqu'on la place à côté d'une membrane, vierge, non-fonctionnalisée qui est de couleur blanche.

On réalise une analyse aux infrarouges de la membrane fonctionnalisée préparée comme décrit ci-dessus et à titre de comparaison d'une membrane vierge, « blanche », non fonctionnalisée.

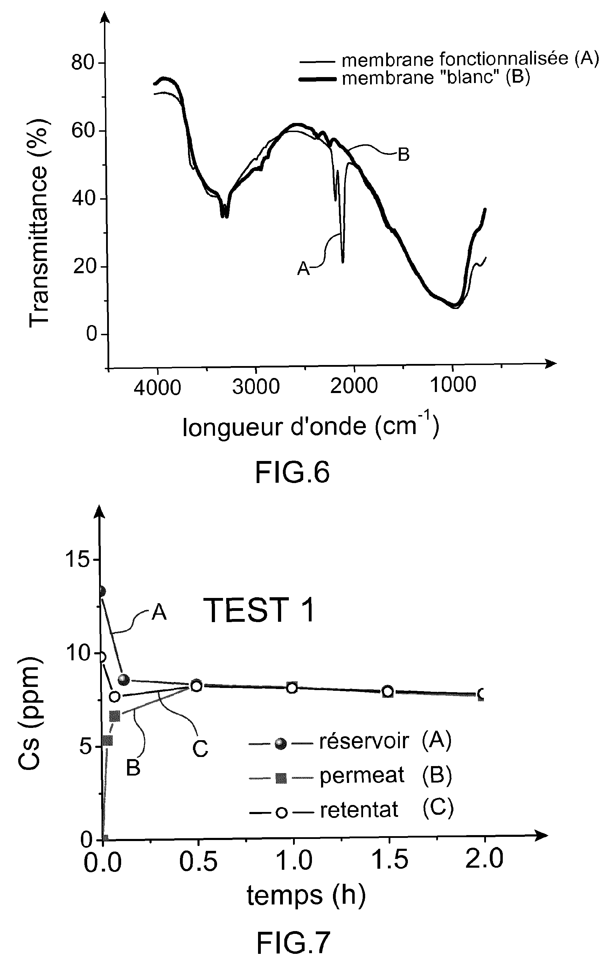

Les spectres Infrarouges obtenus sont montrés sur la Figure 6.

Lorsque l'on compare le spectre IR de la membrane fonctionnalisée avec le spectre IR de la membrane vierge, on note dans le spectre IR de la membrane fonctionnalisée la présence d'un pic à 2100cm⁻¹ caractéristique des liaisons CN alors que ce pic n'existe pas dans le spectre IR de la membrane vierge. L'existence de ce pic confirme donc la présence de nanoparticules d'hexacyanoferrates de cuivre au sein de la membrane.

**Exemple** 2 : Essais d'extraction du césium à partir d'une solution aqueuse de nitrate de césium en utilisant la membrane préparée dans l'exemple 1.

Dans cet exemple on réalise des essais d'extraction, fixation du césium contenu dans une solution aqueuse de nitrate de césium à l'aide de la membrane préparée dans l'exemple 1.

Ces essais sont réalisés dans une installation pilote de filtration.

Cette installation pilote est semblable à l'installation représentée sur la Figure 4 à la différence près, toutefois, que la conduite de sortie 13 (R), et la conduite de sortie 15 (P) sont redirigées vers le réservoir 1 afin de travailler en boucle pour cet essai de faisabilité.

Cette installation fonctionne en écoulement tangentiel et comprend :
- un réservoir contenant la solution à traiter (volume utilisé de l'ordre de 1 L). Ce réservoir est à double paroi et il est thermostaté afin de maintenir la température constante.
- une pompe de circulation et de mise en pression. Le refoulement de la pompe est relié à l'entrée de la membrane tandis que son aspiration est reliée à la base du réservoir.
- une sortie retentât de la membrane qui est reliée au sommet du réservoir par l'intermédiaire d'une canalisation sur laquelle est placé un manomètre qui indique la pression de travail en aval de la membrane. Pour ces essais, la pression utilisée est de 1 bar.
- une sortie perméât de la membrane, qui est également reliée au réservoir par l'intermédiaire d'une canalisation munie d'une vanne 3 voies.

La membrane fonctionnalisée préparée dans l'exemple 1, est testée en mode dynamique dans l'installation pilote de filtration avec 900 mL d'eau ultra-pure contenant du nitrate de césium, à une concentration initiale de 0,1 mMol/L (soit 13 ppm environ).

L'essai est réalisé pendant 2 heures en continu.

On prélève au début et à la fin de l'essai, et régulièrement au cours de l'essai, des échantillons du perméât, du retentât, et de la solution dans le réservoir et on analyse ces échantillons afin d'en déterminer la concentration en césium.

Les résultats des analyses sont indiqués sur la Figure 7 et dans le tableau 2 suivant :

**Tableau 2 : Concentrations initiale et finale en césium de la solution dans le réservoir et capacité d'adsorption de la membrane.**

| Conc. Initiale (ppm) | Conc. Finale (ppm) | Volume de la solution (L) | Masse de la membrane (g) | Cs dans la membrane (ppm) |
|---|---|---|---|---|
| 13,32 | 7,48 | 0,9 | 35,5 | 148 |

Il ressort du Tableau 2 que la membrane fonctionnalisée selon l'invention permet l'extraction du Cs.

La figure 7 montre l'évolution de la quantité de Cs extraite en fonction de la durée écoulée depuis le début de l'essai, dans le perméat, le retentât et le réservoir.

Il apparaît qu'après ½ heure, l'équilibre est atteint, et la concentration en Cs est identique dans le perméat, le retentât et le réservoir.

Ce qui signifie que le Césium est fixé sur la membrane comme cela était attendu.

Il apparaît également que le perméat dans les premiers instants de l'essai ne contient pas de césium.

**Exemple 3 :** Greffage, dans l'eau, d'un greffon à groupement phosphonate dans une membrane de TiO₂ sur un support TiO₂/Al₂O₃, puis croissance, dans l'eau, de nanoparticules d'hexacyanoferrate de nickel dans ladite membrane greffée.

Dans cet exemple, les nanoparticules greffées sont différentes de celles de l'exemple 1, et le solvant utilisé lors de la croissance de ces nanoparticules est différent de celui utilisé dans l'exemple 1.

Le dispositif, montage expérimental utilisé est le même que celui utilisé dans l'exemple 1.

La membrane utilisée est identique à celle utilisée dans l'exemple 1, à savoir une membrane de TiO₂ sur un support TiO₂/Al₂O₃ monocanal de microfiltration présentant une porosité de 0,2 µm et une surface spécifique de la membrane de l'ordre de 0,2 m²/g.

### Greffage du greffon à groupement phosphonate :

Cette étape est réalisée de la même manière que dans l'exemple 1.

### Croissance des nanoparticules :

60 mL d'une première solution de sulfate de nickel à une concentration 10⁻² mol/L dans l'eau ultrapure sont introduits dans le dispositif, montage, de greffage en mode dynamique décrit plus haut.

Cette solution circule dans le dispositif pendant au moins 2 heures. Puis un lavage à l'eau ultrapure est effectué pendant 1 heure.

60 mL d'une seconde solution de ferrocyanure de potassium à une concentration 10⁻²mol/L dans l'eau ultrapure sont alors introduits dans le dispositif de greffage en mode dynamique décrit plus haut.

Cette solution circule dans le système pendant au moins 2 heures. Puis un lavage à l'eau ultrapure est effectué pendant au moins 1 heure.

Ce cycle complet d'imprégnation qui comprend deux étapes de mise en contact de la membrane avec des solutions différentes, chacune de ces étapes de mise en contact étant suivie par une étape de lavage, est répété 4 fois. Finalement, un lavage à l'eau pendant au moins 2 heures est effectué.

### Caractérisation de la membrane après fonctionnalisation :

On réalise une analyse aux infrarouges de la membrane fonctionnalisée préparée comme décrit ci-dessus et à titre de comparaison d'une membrane vierge, « blanche », non fonctionnalisée.

Lorsque l'on compare le spectre IR de la membrane fonctionnalisée avec le spectre IR de la membrane vierge, on note dans le spectre IR de la membrane fonctionnalisée la présence d'un pic à 2100cm⁻¹ caractéristique des liaisons CN alors que ce pic n'existe pas dans le spectre IR de la membrane vierge. L'existence de ce pic confirme donc la présence de nanoparticules d'hexacyanoferrates de nickel au sein de la membrane.

**Exemple 4 :** Essais d'extraction du césium à partir d'une solution aqueuse de nitrate de césium en utilisant la membrane préparée dans l'exemple 3.

Dans cet exemple, on réalise des essais d'extraction, fixation du césium contenu dans une solution aqueuse de nitrate de césium à l'aide de la membrane préparée dans l'exemple 3.

Ces essais sont réalisés dans l'installation pilote de filtration déjà décrite plus haut.

La membrane fonctionnalisée préparée dans l'exemple 3, est testée en mode dynamique dans l'installation pilote de filtration avec 900 mL d'eau ultra-pure contenant du nitrate de césium, à une concentration initiale de 10 ppm.

On réalise un premier essai (Essai 1) pendant 2 heures en continu.

On prélève au début et à la fin de l'essai, et régulièrement au cours de l'essai, des échantillons du perméat, du retentât, et de la solution dans le réservoir et on analyse ces échantillons afin d'en déterminer la concentration en césium.

L'essai est répété une seconde fois (Essai 2) avec 900 mL d'eau ultrapure contenant du nitrate de césium, à une concentration initiale de 10 ppm, car lors du premier essai l'ensemble du Cs a été adsorbé.

Les résultats des analyses sont indiqués dans le tableau 3 suivant et sur la Figure 8 pour l'Essai Continu 1 :

**Tableau 3: Concentrations initiale et finale en césium de la solution dans le réservoir et capacité d'adsorption de la membrane.**

| Essai | [Cs) initiale (ppm) | [Cs] finale (ppm) | Volume de la solution (L) | Masse de la membrane (g) | Cs dans la membrane (ppm) |
|---|---|---|---|---|---|
| Continu 1 | 9,66 | 0,51 | 0,9 | 35,5 | 232 |
| Continu 2 | 9,55 | 4,2608 | 0,9 | 35,5 | 134 |
| | | | | | 366 |

La membrane préparée dans l'exemple 3 permet l'extraction du Cs avec une capacité de 366 mg de Cs capté pour un 1kg de membrane.

D'un point de vue cinétique, comme le montrent les courbes sur la figure 8, l'extraction du Cs est très rapide, de l'ordre de la ½ heure dans le retentât et immédiate dans le perméat.

## Revendications

1. Membrane supportée comprenant une membrane de filtration poreuse solide inorganique supportée par un support poreux solide inorganique, ladite membrane supportée comprenant des nanoparticules d'un polymère de coordination métallique à ligands CN comprenant des cations Mⁿ⁺, où M est un métal de transition, et n est 2 ou 3 ; et des anions Alk⁺_{y}[M'(CN)ₘ]^{x-}, où Alk est un métal alcalin, y est 0, 1, ou 2, M' est un métal de transition, x est 3 ou 4, et m est 6 ou 8 ; lesdits cations Mⁿ⁺ du polymère de coordination étant liés par une liaison organométallique ou de coordination à un groupe organique d'un greffon organique fixé chimiquement à la surface de la membrane de filtration, à l'intérieur des pores de la membrane de filtration, et éventuellement à l'intérieur des pores du support.

2. Membrane supportée selon la revendication 1, dans laquelle Mⁿ⁺ est Fe²⁺, Ni²⁺, Fe³⁺, Co²⁺, Cu²⁺, ou Zn^{2+.} ; dans laquelle M' est Fe²⁺ ou Fe³⁺ ou Co³⁺ et m est 6 ; ou bien M' est Mo⁵⁺ et m est 8; et dans laquelle [M'(CN)ₘ]^{x-} est [Fe(CN)₆]³⁻, [Fe(CN)₆]⁴⁻, [Co(CN)₆]³⁻ ou [Mo(CN)₈]³⁻.

3. Membrane supportée selon l'une quelconque des revendications précédentes, dans laquelle les cations Mⁿ⁺ sont des cations Ni²⁺, Cu²⁺, Fe²⁺ ou Fe³⁺ et les anions sont des anions [Fe(CN]₆]³⁻ ou [Fe(CN)₆]⁴⁻ ; ou bien les cations sont des cations Fe³⁺ et les anions sont des anions [Mo(CN)₈]³⁻ ; ou bien les cations sont des cations Co²⁺ ou Ni²⁺ et les anions sont des anions [Co(CN)₆]³⁻.

4. Membrane supportée selon l'une quelconque des revendications précédentes, dans laquelle les nanoparticules ont une forme de sphère ou de sphéroïde.

5. Membrane supportée selon l'une quelconque des revendications précédentes, dans laquelle les nanoparticules ont une taille, telle qu'un diamètre, de 3 nm à 30 nm.

6. Membrane supportée selon l'une quelconque des revendications précédentes, dans laquelle le groupe organique est choisi parmi les groupes azotés, tels que la pyridine et les amines ; les groupes oxygénés, tels que les acétylacétonates, et les carboxylates ; et les groupes phosphorés tels que les phosphonates.

7. Membrane supportée selon l'une quelconque des revendications précédentes, dans laquelle la membrane est constituée par au moins un oxyde de métal ou de métalloïde ; de préférence ledit oxyde est choisi parmi Al₂O₃, SiO₂, ZrO₂, TiO₂, et leurs mélanges.

8. Membrane supportée selon l'une quelconque des revendications précédentes, dans laquelle le support est constitué par un matériau choisi parmi les oxydes de métaux, les oxydes de métalloïdes, et leurs mélanges, tels que TiO₂, ZrO₂, Al₂O₃, SiO₂, Y₂O₃, CaO, MgO, et leurs mélanges ; les carbures de métaux, les carbures de métalloïdes tels que SiC, et leurs mélanges ; les silicates tels que les composés de type mullite et cordiérite, et leurs mélanges ; les titanates de métaux tels que la tialite, les titanates de métalloïdes, et leurs mélanges ; et leurs mélanges.

9. Membrane supportée selon l'une quelconque des revendications précédentes, dans laquelle la membrane est une membrane de microfiltration avec une taille moyenne des pores de 2 à 0,1µm, une membrane d'ultrafiltration avec une taille moyenne des pores de 1nm à 100nm, par exemple de 10nm à 100nm, ou une membrane de nanofiltration avec une taille moyenne des pores inférieure à 1nm.

10. Membrane supportée selon l'une quelconque des revendications précédentes, dans laquelle la membrane de filtration est une membrane plane et le support est un support plan, ou bien la membrane est une membrane tubulaire, de préférence à section circulaire ou polygonale, et le support est un support tubulaire, de préférence à section circulaire, ou polygonale.

11. Membrane supportée selon l'une quelconque des revendications précédentes, dans laquelle le support est un bloc ou monolithe dont la forme est celle d'un cylindre de révolution dans lequel sont définis un ou plusieurs canaux à section droite généralement circulaire ou polygonale, parallèles à l'axe dudit cylindre, la paroi interne de ce canal ou de ces canaux étant revêtue d'une couche inorganique formant une ou des membranes de filtration tubulaires.

12. Procédé de préparation de la membrane supportée selon l'une quelconque des revendications 1 à 11, dans lequel on réalise les étapes successives suivantes :
a) on fournit une membrane supportée comprenant une membrane de filtration poreuse solide inorganique supportée sur un support poreux solide inorganique ;
b) on réalise la fixation chimique du greffon organique à la surface de la membrane de filtration, à l'intérieur des pores de la membrane de filtration, et éventuellement à l'intérieur des pores du support;
c) on met en contact la membrane de filtration poreuse solide inorganique à la surface de laquelle et à l'intérieur des pores de laquelle est fixé le greffon organique et le support poreux solide inorganique à l'intérieur des pores duquel est éventuellement fixé le greffon inorganique avec une solution contenant l'ion Mⁿ⁺, puis on lave une ou plusieurs fois la membrane supportée ainsi obtenue;
d) on met en contact la membrane supportée obtenue à l'issue de l'étape c) avec une solution d'un complexe de [M'(CN)ₘ]^{x-}, de préférence ledit complexe de [M'(CN)ₘ]^{x-} répond à la formule suivante :
(Cat)ₓ[M'(CN)ₘ],
où M', m, et x ont la signification déjà donnée dans la revendication 1, et Cat est un cation choisi parmi les cations de métaux alcalins tels que K ou Na, les ammoniums, les ammoniums quaternaires tels que le tétrabutylammonium (« TBA »), et les phosphoniums tels que le tétraphénylphosphonium (« PPh₄ ») ;
e) on lave une ou plusieurs fois la membrane supportée obtenue à l'issue de l'étape d);
f) on répète éventuellement les étapes c) à e), de préférence les étapes c) à e) sont répétées de 1 à 4 fois.

13. Procédé selon la revendication 12, dans lequel la fixation chimique du greffon organique à la surface de la membrane de filtration, à l'intérieur des pores de la membrane de filtration, et éventuellement à l'intérieur des pores du support, est réalisée en mettant en contact la membrane de filtration poreuse et le support poreux avec une solution, telle qu'une solution dans l'eau ou le méthanol, de ₂(EtO)-(P=O)-CH₂)₂-NH-(CH₂)₂-NH₂.

14. Procédé selon l'une quelconque des revendications 12 et 13, dans lequel la solution contenant l'ion Mⁿ⁺ est une solution, dans un solvant choisi parmi l'eau, les alcools tel que le méthanol, et leurs mélanges, d'un ou plusieurs sels contenant l'ion Mⁿ⁺.

15. Procédé pour séparer au moins un cation métallique et des particules solides à partir d'un milieu liquide les contenant, ledit milieu liquide étant notamment un milieu liquide aqueux, tel qu'une solution aqueuse ; dans lequel on met en contact un courant du milieu liquide avec une première face de la membrane supportée, selon l'une quelconque des revendications 1 à 11 opposée au support, on applique une différence de pression entre les deux faces opposées de la membrane supportée, moyennant quoi une première partie du courant du milieu liquide traverse la membrane supportée, est recueillie sur la seconde face de la membrane supportée et forme un perméat appauvri en cation métallique et en particules solides ; une seconde partie du courant du milieu liquide ne traverse pas la membrane supportée, est recueillie sur la première face de la membrane supportée et forme un retentât enrichi en particules solides ; et le cation métallique est immobilisé à la surface de la membrane de filtration poreuse solide inorganique, à l'intérieur des pores de la membrane de filtration poreuse solide inorganique, et éventuellement à l'intérieur des pores du support poreux solide inorganique.

16. Procédé selon la revendication 15, dans lequel ledit milieu liquide est choisi parmi les liquides et effluents issus de l'industrie et des installations nucléaires et des activités mettant en oeuvre des radionucléides.

17. Procédé selon l'une quelconque des revendications 15 à 16, dans lequel ledit cation est présent à une concentration de 0,1 picogramme à 100 mg/L, de préférence de 0,1 picogramme à 10 mg/L.

18. Procédé selon l'une quelconque des revendications 15 à 17, dans lequel le cation est un cation d'un élément choisi parmi Cs, Co, Ag, Ru, Fe et TI et les isotopes, notamment radioactifs de ceux-ci ; en particulier le cation est un cation du ¹³⁴Cs, ou du ¹³⁷Cs.

19. Procédé selon l'une quelconque des revendications 15 à 18, dans lequel le courant du milieu liquide est mis en contact avec la première face de la membrane supportée, en circulant parallèlement à ladite face, c'est-à-dire que l'on réalise une filtration tangentielle du courant de milieu liquide.

## Patentansprüche

1. Gestützte Membran, umfassend eine anorganische feste poröse Filtermembran, gestützt durch eine anorganische feste poröse Stütze, wobei die genannte gestützte Membran Nanopartikel eines metallischen CN-Ligandenkoordinationspolymers (cyano-bridged coordination polymer nanoparticles) umfasst, mit Mⁿ⁺-Kationen, wo M ein Übergangsmetall ist und n 2 oder 3 ist ; und mit Alk⁺_{y}-[M'(CN)ₘ]^{x-} Anionen, wo Alk ein alkalisches Metall ist, y 0,1 oder 2 ist, M' ein Übergangsmetall ist, x 3 oder 4 ist, und m 6 oder 8 ist ; wobei die genannten Mⁿ⁺-Kationen des Koordinationspolymers durch eine organometallische oder koordinative Bindung mit einer organischen Gruppe einer organischen Pfropfung, chemisch fixiert an der Oberfläche der Filtermembran, im Innern der Poren der Filtermembran und eventuell im Innern der Poren der Stütze, verbunden sind.

2. Gestützte Membran nach Anspruch 1, bei der Mⁿ⁺ stellvertretend ist für Fe²⁺, Ni²⁺, Fe³⁺, Co²⁺, Cu²⁺, oder Zn²⁺ ; bei der M' stellvertretend ist für Fe²⁺ oder Fe³⁺ oder Co³⁺ und m 6 ist ; oder M' stellvertretend ist für Mo⁵⁺ und m 8 ist; und bei dem [M'(CN)ₘ]^{x-} stellvertretend ist für [Fe(CN)₆]³⁻, [Fe(CN)₆]⁴⁻, [Co(CN)₆]³⁻ oder [Mo(CN)₈]³⁻.

3. Gestützte Membran nach einem der vorhergehenden Ansprüche, bei der die Mⁿ⁺-Kationen Ni²⁺-, Cu²⁺-, Fe²⁺- oder Fe³⁺-Kationen sind und die Anionen [Fe(CN)₆]³⁻- oder [Fe(CN)₆]⁴⁻-Anionen sind ; oder die Kationen Fe³⁺-Kationen sind und die Anionen [Mo(CN)₈]³⁻-Anionen sind ; oder die Kationen Co²⁺- oder Ni²⁺-Kationen sind und die Anionen [Co(CN)₆]³⁻ sind.

4. Gestützte Membran nach einem der vorhergehenden Ansprüche, bei der die Nanopartikel eine Sphären- oder Sphäroidenform aufweisen.

5. Gestützte Membran nach einem der vorhergehenden Ansprüche, bei der die Nanopartikel eine einem Durchmesser von 3 nm bis 30 nm entsprechende Größe haben.

6. Gestützte Membran nach einem der vorhergehenden Ansprüche, bei der die organische Gruppe ausgewählt wird unter den stickstoffhaltigen Gruppen, zum Beispiel dem Pyridin und den Aminen ; den sauerstoffhaltigen Gruppen, zum Beispiel den Acetylacetonaten und den Carboxylaten ; und den phosphorhaltigen Gruppen, zum Beispiel den Phosphonaten.

7. Gestützte Membran nach einem der vorhergehenden Ansprüche, bei der die Membran durch wenigstens ein Metall- oder Metalloidoxid gebildet wird ; das genannte Oxid wird vorzugsweise ausgewählt unter Al₂O₃, SiO₂, ZrO₂, TiO₂, und ihren Mischungen.

8. Gestützte Membran nach einem der vorhergehenden Ansprüche, bei der die Stütze durch ein Material gebildet wird, das ausgewählt wird unter den Metalloxiden, den Metalloidoxiden, und ihren Mischungen, zum Beispiel TiO₂, ZrO₂, Al₂O₃, SiO₂, Y₂O₃, CaO, MgO, und ihren Mischungen ; den Metallkarbiden, den Metalloidkarbiden, zum Beispiel SiC, und ihren Mischungen ; den Silikaten, zum Beispiel den Mischungen bzw. Verbindungen des Typs Mullit und Cordierit, und ihren Mischungen; den Metalltitanaten, zum Beispiel Tialit, den Metalloidtitanaten, und ihren Mischungen ; und deren Mischungen.

9. Gestützte Membran nach einem der vorhergehenden Ansprüche, bei der die Membran eine Mikrofiltermembran mit einer mittleren Porengröße von 2 bis 0,1 µm, eine Ultrafiltermembran mit einer mittleren Porengröße von 1 nm bis 100 nm, zum Beispiel 10 nm bis 100 nm, oder eine Nanofiltermembran mit einer mittleren Porengröße unter 1 nm ist.

10. Gestützte Membran nach einem der vorhergehenden Ansprüche, bei der die Filtermembran eine plane bzw. ebene Membran und die Stütze eine plane bzw. ebene Stütze ist, oder die Filtermembran eine röhrenförmige Membran und die Stütze eine röhrenförmige Stütze ist, vorzugsweise mit rundem oder vieleckigem Querschnitt.

11. Gestützte Membran nach einem der vorhergehenden Ansprüche, bei der die Stütze ein Block oder Monolith ist, dessen Form die eines Drehzylinders ist, in dem ein Kanal oder mehrere Kanäle mit geradem, generell rundem oder vieleckigem Querschnitt definiert sind, parallel zur Achse des genannten Zylinders, wobei die Innenwand dieses Kanals oder dieser Kanäle überzogen ist mit einer anorganischen Schicht, welche eine röhrenförmige Filtermembran bildet oder röhrenförmige Filtermembranen bilden.

12. Verfahren zur Herstellung der gestützten Membran nach einem der Ansprüche 1 bis 11, bei dem man die folgenden sukzessiven Schritte ausführt:
a) Bereitstellen einer eine anorganische feste poröse Filtermembran umfassende gestützte Membran, gestützt auf bzw. durch eine anorganische feste poröse Stütze ;
b) chemisches Fixieren der organischen Pfropfung an der Oberfläche der Filtermembran, im Innern der Poren der Filtermembran, und eventuell im Innern der Poren der Stütze ;
c) in Kontakt bringen der anorganischen festen porösen Filtermembran, an deren Oberfläche und im Innern ihrer Poren die organische Pfropfung fixiert ist, und der anorganischen festen porösen Stütze, im Innern von deren Poren eventuell die anorganische Pfropfung fixiert ist mit einer das Ion Mⁿ⁺ enthaltenden Lösung, dann ein- oder mehrmaliges Waschen der so erhaltenen gestützten Membran ;
d) in Kontakt bringen der am Ende des Schritts c) erhaltenen gestützten Membran mit einer Lösung eines [M'(CN)ₘ]^{x-}-Komplexes, wobei der genannte [M'(CN)ₘ]^{x-}-Komplex die folgende Formel entspricht:
(Cat)ₓ[M'(CN)ₘ],
wo M', m, und x die schon in Anspruch 1 angegebene Bedeutung haben, und Cat ein Kation ist, ausgewählt unter den Alkalimetallen, zum Beispiel K oder Na, den Ammoniums, den quarternären Ammoniums, zum Beispiel dem Tetrabutylammonium ("TBA"), und den Phosphoniums, zum Beispiel dem Tetraphenylphosphonium ("PPh₄") ;
e) ein- oder mehrmaliges Waschen der am Ende von Schritt d) erhaltenen gestützten Membran ;
f) eventuelles Wiederholen der Schritte c) bis e); vorzugweise wiederholt man die Schritte c) bis e) 1- bis 4-mal.

13. Verfahren nach Anspruch 12, bei dem die chemische Fixierung der organischen Pfropfung an der Oberfläche der Filtermembran, im Innern der Poren der Filtermembran und eventuell im Innern der Poren der Stütze realisiert wird, indem man die poröse Filtermembran und die poröse Stütze mit einer Lösung in Kontakt bringt, zum Beispiel einer Lösung von ₂(EtO)-(P=O)-(CH₂)₂ -NH-(CH₂)₂ -NH₂ in Wasser oder Methanol.

14. Verfahren nach einem der Ansprüche 12 und 13, bei dem die das Mⁿ⁺-Ion enthaltende Lösung eine Lösung in einem Lösungsmittel ist, das ausgewählt wird unter Wasser, den Alkoholen wie etwa Methanol, und ihren Mischungen, einem oder mehreren das Mⁿ⁺ enthaltenden Salzen.

15. Verfahren zum Trennen von wenigstens einem metallischen Kation und von festen Partikeln von einem sie enthaltenden flüssigen Medium, wobei das genannte flüssige Medium insbesondere ein flüssiges wässriges Medium wie zum Beispiel eine wässrige Lösung ist; in der man einen Strom des flüssigen Mediums in Kontakt bringt mit einer der Stütze entgegengesetzten ersten Seite der gestützten Membran, nach einem der Ansprüche 1 bis 11, man eine Druckdifferenz zwischen den beiden entgegengesetzten Seiten der gestützten Membran erzeugt, auf Grund dessen ein erster Teil des Stroms des flüssigen Mediums die gestützte Membran durchquert, sich auf der zweiten Seite der gestützten Membran sammelt und ein an metallischen Kationen und festen Partikeln verarmtes Permeat bildet ; ein zweiter Teil des Stroms des flüssigen Mediums durchquert die gestützte Membran nicht, sammelt sich auf der ersten Seite der gestützten Membran und bildet ein mit festen Partikeln angereichertes Retentat; und das metallische Kation ist immobilisiert an der Oberfläche der anorganischen festen porösen Filtermembran, im Innern der Poren der anorganischen festen porösen Filtermembran, und eventuell im Innern der Poren der anorganischen festen porösen Stütze.

16. Verfahren nach Anspruch 15, bei dem das genannte flüssige Medium ausgewählt wird unter Flüssigkeiten und Abwässern, die von der Kernkraft industrie und von Kernkraftwerken sowie von Aktivitäten, bei denen Radionuklide benutzt werden, stammen.

17. Verfahren nach einem der Ansprüche 15 bis 16, bei dem das genannte Kation präsent ist mit einer Konzentration von 0,1 Picogramm pro 100 mg/L, vorzugsweise 0,1 Picogramm pro 10 mg/L.

18. Verfahren nach einem der Ansprüche 15 bis 17, bei dem das genannte Kation ein Kation eines Elements ist, das ausgewählt wird unter Cs, Co, Ag, Ru, Fe und TI und den Isotopen, insbesondere den radioaktiven von diesen ; insbesondere ist das Kation ein Kation von ¹³⁴Cs, oder von ¹³⁷Cs.

19. Verfahren nach einem der Ansprüche 15 bis 18, bei dem der Strom des flüssigen Mediums in Kontakt kommt mit der ersten Seite der gestützten Membran, indem er parallel zu der genannten Seite fließt, das heißt, dass man eine tangentiale Filterung des Stroms aus flüssigem Medium realisiert.

## Claims

1. A supported membrane comprising an inorganic, solid, porous filtration membrane supported by an inorganic solid porous support, said supported membrane comprising nanoparticles of a metal coordination polymer with CN ligands comprising Mⁿ⁺ cations, where M is a transition metal and n is 2 or 3 ; and Alk⁺_{y}[M'(CN)ₘ]^{x-} anions, where Alk is an alkaline metal, y is 0, 1, or 2, M' is a transition metal, x is 3 or 4, and m is 6 or 8; said Mⁿ⁺ cations of the coordination polymer being bound through an organometallic or coordination bond to an organic group of an organic graft chemically attached to the surface of the filtration membrane, inside the pores of the filtration membrane, and optionally inside the pores of the support.

2. The supported membrane according to claim 1 wherein Mⁿ⁺ is Fe²⁺, Ni²⁺, Fe³⁺, Co²⁺, Cu²⁺ or Zn²⁺; wherein M' is Fe²⁺ or Fe³⁺ or Co³⁺ and m is 6; or else M' is Mo⁵⁺ and m is 8; and wherein [M'(CN)ₘ]^{x-} is [Fe(CN)₆]³⁻, [Fe(CN)₆]⁴⁻, [Co(CN)₆]³⁻ or [Mo(CN)₈]³⁻.

3. The supported membrane according to any one of the preceding claims wherein the Mⁿ⁺ cations are Ni²⁺, Cu²⁺, Fe²⁺ or Fe³⁺ cations and the anions are [Fe(CN)₆]³⁻ or [Fe(CN)₆]⁴⁻ anions; or else the cations are Fe³⁺ cations and the anions are [Mo(CN)₈]³⁻ anions; or else the cations are Co²⁺ or Ni²⁺ cations and the anions are [Co(CN)₆]³⁻ anions.

4. The supported membrane according to any one of the preceding claims wherein the nanoparticles are of a spherical or spheroidal shape.

5. The supported membrane according to any one of the preceding claims wherein the size, such as the diameter, of the nanoparticles is 3 nm to 30 nm.

6. The supported membrane according to any one of the preceding claims wherein the organic group is selected from among nitrogen-containing groups such as pyridine and amines; oxygen-containing groups such as acetylacetonates and carboxylates; and phosphorus-containing groups such as phosphonates.

7. The supported membrane according to any one of the preceding claims wherein the membrane consists of at least one metal oxide or metalloid oxide; preferably said oxide is selected from among Al₂O₃, SiO₂, ZrO₂, TiO₂, and mixtures thereof.

8. The supported membrane according to any one of the preceding claims, wherein the support consists of a material selected from among metal oxides, metalloid oxides, and mixtures thereof, such as TiO₂, ZrO₂, Al₂O₃, SiO₂, Y₂O₃, CaO, MgO, and mixtures thereof; metal carbides, metalloid carbides such as SiC, and mixtures thereof; silicates such as compounds of mullite and cordierite type, and mixtures thereof; metal titanates such as tialite, metalloid titanates, and mixtures thereof; and mixtures thereof.

9. The supported membrane according to any one of the preceding claims wherein the membrane is a microfiltration membrane with a mean pore size of 2 to 0.1 µm, an ultrafiltration membrane with a mean pore size of 1 nm to 100 nm, for example 10 nm to 100 nm, or a nanofiltration membrane with a mean pore size of less than 1 nm.

10. The supported membrane according to any one of the preceding claims wherein the filtration membrane is a planar membrane and the support is a planar support, or else the membrane is a tubular membrane, preferably with a circular or polygonal cross-section, and the support is a tubular support preferably with a circular or polygonal cross-section.

11. The supported membrane according to any one of the preceding claims wherein the support is a block or monolith having the shape of a cylinder of revolution wherein one or more channels are defined, generally of circular or polygonal cross-section, parallel to the axis of said cylinder, the inner wall of this channel or of these channels being coated with an inorganic layer forming one or more tubular filtration membranes.

12. A process for preparing the supported membrane according to any one of claims 1 to 11 wherein the following successive steps are carried out:
a) a supported membrane is provided comprising an inorganic, solid porous filtration membrane supported on an inorganic, solid porous support;
b) the organic graft is chemically attached, grafted to the surface of the filtration membrane, inside the pores of the filtration membrane and optionally inside the pores of the support;
c) the inorganic, solid porous filtration membrane to the surface of which and inside the pores of which the organic graft is attached, and the inorganic solid porous support inside the pores of which the organic graft is optionally attached, are contacted with a solution containing the Mⁿ⁺ ion, and then the supported membrane thus obtained is washed one or more times;
d) the supported membrane obtained at the end of step c) is contacted with a solution of a complex of [M'(CN)ₘ]^{x-}, preferably said complex of [M'(CN)ₘ]^{x-} meets the following formula:
(Cat)ₓ[M'(CN)ₘ]
where M', m and x have the meaning already given in claim 1, and Cat is a cation selected from among cations of alkaline metals such as K or Na, ammoniums, quaternary ammoniums such as tetrabutylammonium (« TBA »), and phosphoniums such as tetraphenylphosphonium (« PPh₄ »);
e) the supported membrane obtained at the end of step d) is washed one or more times;
f) steps c) to e) are optionally repeated, preferably steps c) to e) are repeated 1 to 4 times.

13. The process according to claim 12 wherein the chemical attaching of the organic graft to the surface of the filtration membrane, inside the pores of the filtration membrane, and optionally inside the pores of the support, is performed by contacting the porous filtration membrane and the porous support with a solution, such as a solution in water or methanol of ₂(EtO)-(P=O)-(CH₂)₂-NH-(CH₂)₂-NH₂.

14. The process according to any one of claims 12 and 13 wherein the solution containing the Mⁿ⁺ ion is a solution, in a solvent selected from among water, alcohols such as methanol, and mixtures thereof, of one or more salts containing the Mⁿ⁺ ion.

15. A method for separating at least one metal cation and solid particles from a liquid medium containing the same, said liquid medium being especially an aqueous liquid medium, such as an aqueous solution; wherein a stream of the liquid medium is contacted with a first face of the supported membrane, according to any one of claims 1 to 11, opposite the support, a pressure difference is applied between the two opposite faces of the supported membrane, whereby a first portion of the stream of the liquid medium passes through the supported membrane, is collected on the second face of the supported membrane and forms a permeate depleted in metal cation and in solid particles ; a second portion of the stream of the liquid medium does not pass through the supported membrane, is collected on the first face of the supported membrane and forms a retentate enriched in solid particles; and the metal cation is immobilised at the surface of the inorganic, solid porous filtration membrane, inside the pores of the inorganic solid porous filtration membrane, and optionally inside the pores of the inorganic solid porous support.

16. The method according to claim 15 wherein said liquid medium is selected from among liquids and effluents derived from the nuclear industry and plants and from activities using radionuclides.

17. The method according to any one of claims 15 to 16 wherein said cation is present at a concentration of 0.1 picogram to 100 mg/L, preferably 0.1 picogram to 10 mg/L.

18. The method according to any one of claims 15 to 17 wherein the cation is a cation of an element selected from among Cs, Co, Ag, Ru, Fe and TI and the isotopes, particularly radioactive isotopes, thereof; especially the cation is a cation of ¹³⁴Cs, or of ¹³⁷Cs.

19. The method according to any one of claims 15 to 18, wherein the stream of the liquid medium is contacted with the first face of the supported membrane, circulating parallel to said face i.e. cross-flow filtration of the stream of the liquid medium is carried out.
